# EUROPEAN PATENT APPLICATION

(11) **EP 4 848 572 A1**
(43) Date of publication of application: **02.12.2026**
(21) Application number: 26175273.7
(22) Date of filing: 29.04.2026
(51) Int. Cl.: H02P 6/08, H02P 27/06

(54) **POWER TOOL**

(30) Priority: 27.05.2025 CN 202510694333; 17.06.2025 CN 202510811888; 18.07.2025 CN 202511001702; 08.08.2025 CN 202511115243
(71) Applicant: Nanjing Chervon Industry Co., Ltd., Nanjing, Jiangsu 211106 (CN)
(72) Inventor: WANG, Wenbin, Nanjing (CN); HUANG, Wei, Nanjing (CN); DUAN, Junya, Nanjing (CN); ZHANG, Lunlun, Nanjing (CN)
(74) Representative: Sun, Yiming

(57) **Abstract**

A power tool includes: a working head; an electric motor driving the working head; a battery pack suppling power to the electric motor; and a circuit board assembly electrically connected to the electric motor and the battery pack. The circuit board assembly includes: a detection circuit configured to detect a working parameter of the power tool; a driver circuit including multiple switching elements electrically connected between the battery pack and the electric motor; and a controller configured to control the multiple switching elements according to the working parameter to control the battery pack to supply electric power to the electric motor. The voltage of the battery pack is greater than or equal to 4 V and less than or equal to 80 V, and the ratio of the maximum continuous output power of the power tool to the weight of the circuit board assembly is greater than or equal to 9.0 kW/kg.

## Description

### TECHNICAL FIELD

The present application relates to the technical field of tools and, in particular, to a power tool.

### BACKGROUND

Power tools are more environmentally friendly than engine-powered tools and thus are widely applied. The power tool is generally driven by an electric motor to operate. The power tool is provided with a circuit board that controls the electric motor, and the electric motor is electrically connected to the circuit board via electric motor wires.

Currently, the trend of the power tool toward miniaturization and integration is becoming increasingly apparent, and the circuit board disposed in the power tool also needs to be reduced in volume accordingly. However, a small volume means a weaker heat dissipation capability. Under the same power, the power loss needs to be further reduced, placing higher demands on the circuit board.

This part provides background information related to the present application, and the background information is not necessarily the existing art.

### SUMMARY

An object of the present application is to solve or at least alleviate part or all of the preceding problems. Therefore, an object of the present application is to provide a power tool having a circuit board assembly with a high power density.

To achieve the preceding object, the present application adopts the technical solutions below.

A power tool includes: a working head; an electric motor configured to drive the working head directly or indirectly; a battery pack configured to supply power to the electric motor; and a circuit board assembly electrically connected to the electric motor and the battery pack. The circuit board assembly includes at least: a detection circuit configured to detect a working parameter of the power tool; a driver circuit including multiple switching elements electrically connected between the battery pack and the electric motor; and a controller configured to control the multiple switching elements according to the working parameter to control the battery pack to supply electric power to the electric motor. The voltage of the battery pack is greater than or equal to 4 V and less than or equal to 80 V, and the ratio of the maximum continuous output power of the power tool to the weight of the circuit board assembly is greater than or equal to 9.0 kW/kg.

In some examples, the working parameter includes the voltage, temperature, and current of the power tool.

In some examples, the circuit board assembly includes at least two printed circuit boards, and the multiple switching elements and the controller are disposed on different ones of the at least two printed circuit boards.

In some examples, the circuit board assembly further includes a metal housing, the at least two printed circuit boards are enclosed by the metal housing, and the thermal conductivity of the metal housing is greater than or equal to 90 W/(m·K).

In some examples, the circuit board assembly further includes a capacitor board, a capacitor is mounted on the capacitor board, the capacitor board is perpendicular to a power board, and the capacitor is parallel to the power board.

In some examples, the capacitor is cylindrical, the package diameter of the capacitor is less than or equal to 10 mm, and the package length of the capacitor is less than or equal to 16 mm.

In some examples, a printed circuit board of the at least two printed circuit boards is a multilayer printed circuit board, and the multilayer printed circuit board adopts a drilling manner combining blind vias and buried vias to achieve an electrical connection.

In some examples, the multilayer printed circuit board includes a first layer to a sixth layer, a blind via at a first position is used for connecting the first layer to a third layer, a blind via at a third position is used for connecting a fourth layer to the sixth layer, and a buried via at a second position is used for connecting the third layer and the fourth layer.

In some examples, the controller is a highly integrated controller, and the highly integrated controller integrates at least one of a battery voltage detection function, a current detection function, a phase voltage feedback circuit, or a dualchannel circuit.

In some examples, the multiple switching elements include multiple low-side switching elements, the controller is a highly integrated controller, the highly integrated controller has at least two first operational amplifiers integrated inside, and the at least two first operational amplifiers are connected in parallel with any two of the multiple low-side switching elements to detect the voltages across the any two of the multiple low-side switching elements.

In some examples, the highly integrated controller is configured to detect the temperature of a power transistor in a low-side switching element of the multiple low-side switching elements, calculate and determine the internal resistance of the power transistor according to a model and the temperature of the power transistor, and determine a phase current flowing through the power transistor according to the internal resistance of the power transistor.

In some examples, a corresponding relationship between the internal resistance and the temperature differs for different models of power transistors.

In some examples, the circuit board assembly includes one current sense resistor disposed between a low-side switching element and a ground terminal of a direct current (DC) bus, and all three phases of currents are capable of flowing through the current sense resistor.

In some examples, the circuit board assembly further includes a current sampling device and a second operational amplifier, the current sampling device samples a phase current of the electric motor, and the second operational amplifier acquires and amplifies a differential voltage signal across the current sampling device.

In some examples, the resistance of the current sampling device is less than or equal to 10 mΩ, and the gain-bandwidth product of the second operational amplifier is greater than or equal to 5 MHz.

In some examples, a power tool includes: a working head; an electric motor configured to drive the working head directly or indirectly; a battery pack configured to supply power to the electric motor; and a circuit board assembly electrically connected to the electric motor and the battery pack. The circuit board assembly includes at least: a detection circuit configured to detect a working parameter of the power tool; a driver circuit including multiple switching elements electrically connected between the battery pack and the electric motor; and a controller configured to control the multiple switching elements according to the working parameter to control the battery pack to supply electric power to the electric motor. The voltage of the battery pack is greater than or equal to 4 V and less than or equal to 80 V, and the ratio of the maximum continuous output power of the power tool to the volume of the circuit board assembly is greater than or equal to 35 kW/L.

In some examples, a power tool includes: a working head; an electric motor configured to drive the working head directly or indirectly; a battery pack configured to supply power to the electric motor; and a circuit board assembly electrically connected to the electric motor and the battery pack. The circuit board assembly includes at least: a detection circuit configured to detect a working parameter of the power tool; a driver circuit including multiple switching elements electrically connected between the battery pack and the electric motor; and a controller configured to control the multiple switching elements according to the working parameter to control the battery pack to supply electric power to the electric motor. The voltage of the battery pack is greater than or equal to 4 V and less than or equal to 80 V, and the ratio of the maximum continuous output power of the power tool to the maximum vertical projection area of the circuit board assembly is greater than or equal to 0.1 kW/cm².

In some examples, a power tool includes: a working head; an electric motor configured to drive the working head directly or indirectly; a battery pack configured to supply power to the electric motor; and a circuit board assembly electrically connected to the electric motor and the battery pack. The circuit board assembly includes at least: a current sampling device connected in series in a discharging circuit of the electric motor and the battery pack; a second operational amplifier configured to acquire a differential voltage signal across the current sampling device and amplify the differential voltage signal; a driver circuit including multiple switching elements electrically connected between the battery pack and the electric motor; and a controller configured to calculate the current of the electric motor according to the amplified differential voltage signal and control the multiple switching elements according to at least the current to control the battery pack to supply electric power to the electric motor. The gain-bandwidth product of the second operational amplifier is greater than or equal to 5 MHz, and the resistance of the current sampling device is less than or equal to 10 mΩ.

In some examples, the multiple switching elements include low-side switching elements, and the current sampling device is a power transistor of a low-side switching element of the low-side switching elements.

In some examples, the current sampling device is one current sense resistor disposed between a low-side switching element and a ground terminal of a DC bus, and all three phases of currents are capable of flowing through the current sense resistor.

The advantage of the present application is as follows: the circuit board assembly is suitable for power tools with various voltages, and the ratio of the maximum continuous output power of the power tool to the weight of the circuit board assembly is larger, resulting in a higher power density of the circuit board assembly.

### BRIEF DESCRIPTION OF DRAWINGS

FIG. 1 is a perspective view of a power tool according to an example.
FIG. 2 is a circuit block diagram of a power tool including a current sense resistor according to an example.
FIG. 3 is a circuit diagram of a differential amplifier circuit according to an example.
FIG. 4 is a diagram illustrating current sampling time windows during a PWM cycle according to an example.
FIG. 5A is a circuit block diagram of a power tool including a rotor position detection module and an actual rotational speed detection module according to an example.
FIG. 5B is a circuit block diagram of a power tool in which the actual rotational speed detection module is directly connected to the rotor position detection module.
FIG. 6 is a schematic diagram illustrating that a voltage of an electric motor varies in a square wave manner following a rotor position of the electric motor according to an example.
FIG. 7A is a schematic diagram illustrating that a voltage of an electric motor varies in a sinusoidal wave manner following a rotor position of the electric motor according to an example.
FIG. 7B is a schematic diagram illustrating that a voltage of an electric motor varies in a saddle waveform manner following a rotor position of the electric motor according to an example.
FIG. 8 is a schematic diagram of a control system in a second control manner according to an example.
FIG. 9 is a flowchart of switching between a first control manner and a second control manner based on a real-time load parameter according to an example.
FIG. 10 is a flowchart of switching between a first control manner and a second control manner based on two real-time load parameters according to an example.
FIG. 11 is a perspective view of a power tool according to another example.
FIG. 12 is a circuit block diagram of a power tool according to an example.
FIG. 13A is a schematic view of a packaged circuit board assembly according to an example.
FIG. 13B is a bottom view of the circuit board assembly in FIG. 13A.
FIG. 13C is a schematic view of the internal structure of the circuit board assembly in FIG. 13A.
FIG. 13D is a schematic view of the circuit board assembly in FIG. 13A without a metal housing.
FIG. 13E is a schematic view of a second printed circuit board in the circuit board assembly in FIG. 13A.
FIG. 14 is a schematic view of a heat sink included in a circuit board assembly according to an example.
FIG. 15 is a schematic view illustrating a drilling manner of a multilayer printed circuit board using a combination of blind vias and a buried via according to an example.
FIG. 16 is a circuit block diagram of phase current sampling of an electric motor using one current sense resistor according to an example.
FIG. 17 is a circuit block diagram of phase current sampling of an electric motor without using a current sense resistor according to an example.
FIG. 18 is a schematic diagram illustrating that an operational amplifier is disposed in a controller according to an example.
FIG. 19 is a diagram of a power supply voltage step-up/step-down circuit according to an example.
FIG. 20 is a perspective view illustrating that a power tool is an electric hammer according to an example.

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate member and the two members or assemblies are connected by the at least one intermediate member. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, a lower side may include directly below, bottom left, bottom right, front bottom, and rear bottom.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned units.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

Benefits, other advantages, and solutions to problems are described below with regard to specific embodiments. However, the benefits, advantages, solutions to problems, and any feature(s) that may cause any benefit, advantage, or solution to occur or become more pronounced are not to be construed as a critical, required, or essential feature of any or all the claims.

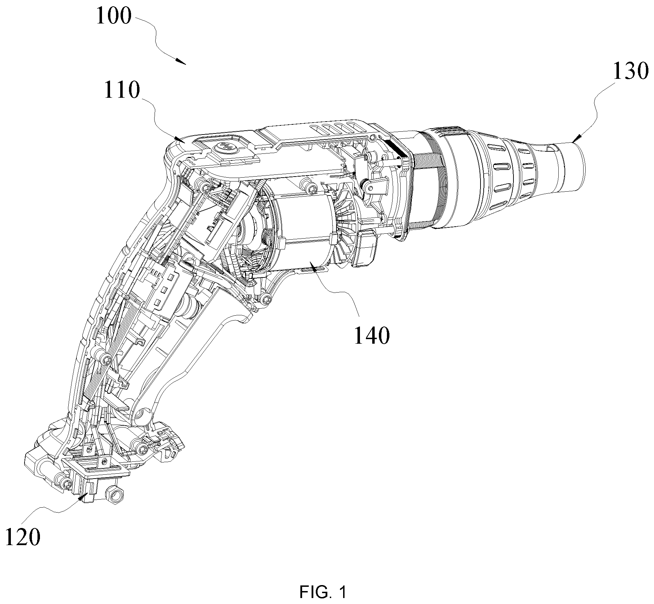

FIG. 1 shows a power tool 100 as an example of the present application. The power tool 100 shown in FIG. 1 is a screwdriver. In other examples, the power tool 100 may also be a handheld power tool, such as a drill, a hedge trimmer, or a sander. Alternatively, the power tool 100 may be a table tool, such as a table saw or a miter saw. Alternatively, the power tool 100 may be a push power tool, such as a push mower or a push snow thrower. Alternatively, the power tool 100 may be a riding power tool, such as a riding mower, a riding vehicle, or an all-terrain vehicle. Alternatively, the power tool 100 may be a robotic tool, such as a robotic mower or a robotic snow thrower. Any other types of power tools that can adopt the substantial content of the technical solutions disclosed below are within the scope of the present application.

As shown in FIG. 1, the power tool 100 includes a housing 110, a power interface 120, a functional piece 130, and a brushless electric motor 140. The housing 110 constitutes a body of the power tool 100, connects or supports the preceding components, and forms an accommodation space capable of accommodating or partially accommodating the preceding components. The power interface 120 is used for connecting a power supply to supply power to the brushless electric motor 140. The functional piece 130 is a component of the power tool 100 that actually performs an operation such as cutting, fastening, grinding, or impacting. The brushless electric motor 140 is at least partially disposed in the housing 110, and the brushless electric motor 140 includes a stator and a rotor.

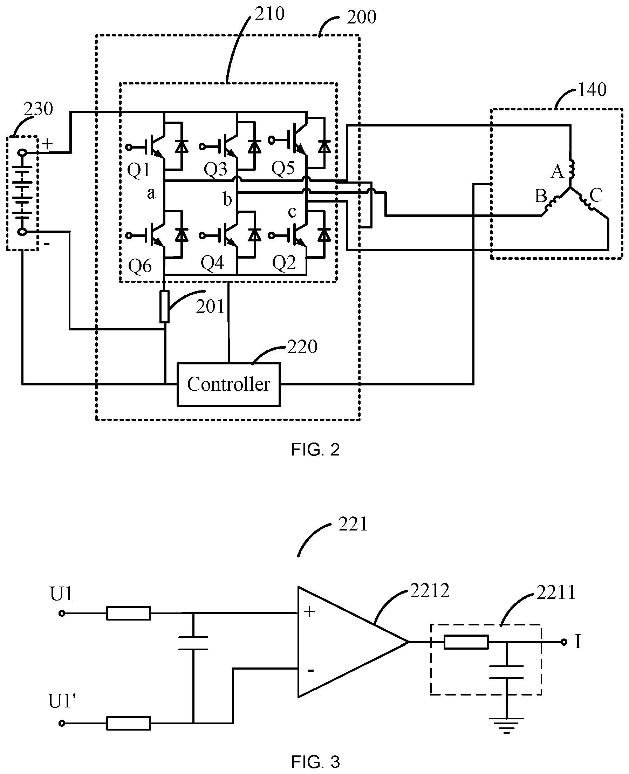

Referring to the circuit block diagram of the power tool 100 shown in FIG. 2, the driving system of the brushless electric motor 140 may include at least a control circuit 200 for controlling the working state of the brushless electric motor 140. The control circuit 200 includes a driver circuit 210 and a controller 220, and the controller 220 is connected to at least the driver circuit 210. The driving system of the brushless electric motor 140 further includes a power module 230 and a current sense resistor 201. The power module 230 supplies power to the brushless electric motor 140 through the DC bus, and the current sense resistor 201 is connected in series with the negative terminal or the positive terminal of the DC bus. As shown in FIG. 2, in this example, the case where the current sense resistor 201 is connected in series with the negative terminal of the DC bus (that is, the negative terminal of the power module 230) is used as an example for specific description. The current sense resistor 201 is also electrically connected to the controller 220 to transmit the detected parameter to the controller 220.

The brushless electric motor 140 is a brushless DC motor. In the present application, the brushless DC motor may be an inrunner or an outrunner. The brushless electric motor 140 includes at least three-phase stator windings A, B, and C which may adopt a star connection or a delta connection. Moreover, the brushless electric motor 140 may detect the rotor position by using a sensor (a position sensor) or may estimate the rotor position without using a sensor (a position sensor). That is, the solution described below in the present application in which the three-phase current of the brushless electric motor 140 is acquired based on one current sense resistor and the brushless electric motor 140 is controlled to operate is applicable to both the sensored brushless electric motor and the sensorless brushless electric motor.

In some examples, the power module 230 may optionally be an AC power supply, that is, AC mains power of 120 V or 220 V may be connected through a power interface. In some examples, the power module 230 may optionally be a battery pack composed of a group of battery cells. For example, the battery cells may be connected in series into a single power supply branch to form a 1P battery pack. In the present application, the case where the power module 230 is a battery pack is used as an example for specific description. The output voltage of the battery pack is changed by a specific power supply control module such as a DC-DC module so that a power supply voltage suitable for the driver circuit 210, the brushless electric motor 140, and the like is outputted to supply power to them. It is to be understood by those skilled in the art that the DC-DC module is a mature circuit structure and may be selected according to specific parameter requirements of the power tool.

The driver circuit 210 is electrically connected to the stator windings A, B, and C of the brushless electric motor 140 and configured to transmit the current from the power module 230 to the stator windings A, B, and C to drive the brushless electric motor 140 to rotate. In some examples, the driver circuit 210 includes multiple switching elements Q1, Q2, Q3, Q4, Q5, and Q6. Q1, Q3, and Q5 are high-side switching elements, and Q2, Q4, and Q6 are low-side switching elements. Any phase of stator winding of the brushless electric motor 140 is connected to one high-side switching element and one low-side switching element. The switching elements Q1 to Q6 are used for converting DC power received from the power module 230 into three-phase AC power to drive the brushless electric motor 140 to operate. The switching elements Q1 to Q6 may also be referred to as power switching transistors Q1 to Q6. In the following description, the switching elements Q1 to Q6 refer to the power switching transistors Q1 to Q6.

The gate terminal of each switching element in the driver circuit 210 is electrically connected to the controller 220 and is configured to receive the control signal from the controller 220. The controller 220 may output the control signal to control the switching element in the driver circuit 210 to be turned on, so as to form a freewheeling state. A drain or a source of each switching element is connected to the stator winding A, B, or C of the brushless electric motor 140. The switching elements Q1 to Q6 receive control signals from the controller 220 to change their respective on states, thereby changing the current loaded to the stator windings A, B, and C of the brushless electric motor 140 by the power module 230. In some examples, the driver circuit 210 may be a three-phase bridge driver circuit including six controllable semiconductor power devices (such as field-effect transistors (FETs), bipolar junction transistors (BJTs), or insulated-gate bipolar transistors (IGBTs)). It is to be understood that the preceding switching elements may be any other types of solid-state switches, such as insulated-gate bipolar transistors (IGBTs) or bipolar junction transistors (BJTs).

The controller 220 is a dedicated controller, such as a dedicated control chip (for example, a microcontroller unit (MCU)). The controller 220 is integrated with a signal processing unit. The signal processing unit is configured to process acquired related parameter signals and has functions of calculation, comparison, and determination. After the signal processing unit processes the signals, the signal processing unit can generate control signals and output the control signals to the driver circuit 210, thereby driving the brushless electric motor 140 to operate.

To drive the brushless electric motor 140 shown in FIG. 2 to operate, the driver circuit 210 has multiple driving states, and in different driving states, the brushless electric motor 140 may have different rotational speeds or different rotation directions. In the present application, the process is not described in detail in which the controller 220 controls the driver circuit 210 to change between different driving states so that the brushless electric motor 140 has different rotational speeds or different rotation directions.

The current sense resistor 201 is specifically disposed between the low-side switching element and the ground terminal (that is, the negative terminal) of the DC bus so that the currents of the three phases can all flow through the current sense resistor 201, and thus the current sense resistor 201 can acquire the currents of the three phases. In the present application, the case where the current sense resistor 201 is disposed between the low-side switching element Q6 and the ground terminal of the DC bus is used as an example for specific description.

The step of acquiring the three-phase current of the brushless electric motor 140 based on the current sense resistor 201 includes the following.

First, the controller 220 drives the switching elements Q1 to Q6 by using PWM technology. The PWM technology may be space vector pulse width modulation (SVPWM) technology, sinusoidal pulse width modulation (SPWM), harmonic injection, or other PWM technologies, which is not limited in the present application. In the present application, the case where PWM technology is SVPWM is used as an example for specific description.

Next, within one PWM cycle, the voltage signal across the current sense resistor 201 may be collected at a first sampling point P1 in a first active vector time window to acquire a first sampling result, and the voltage signal across the current sense resistor 201 may be collected at a second sampling point P2 in a second active vector time window to acquire a second sampling result. The first active vector time window and the second active vector time window are two adjacent active vector time windows.

Finally, the controller 220 reconstructs the three-phase current according to the first sampling result, the second sampling result, and the three-phase current balance equation and generates a PWM drive signal based on the reconstructed three-phase current to control the driver circuit 210. The three-phase current balance equation is based on Kirchhoff's laws. The first sampling result and the second sampling result are the phase currents of any two phases of the brushless electric motor 140.

The following details the process in which the first sampling result is acquired at the first sampling point P1 in the first active vector time window and the second sampling result is acquired at the second sampling point P2 in the second active vector time window.

During SVPWM, the switching elements Q1 to Q6 together form eight switching state combinations, which are six active vectors and two zero vectors. The high-side switching element is defined as "1" when it is turned on, the low-side switching element is defined as "0" when it is turned on, and the eight switching state combinations are each represented in the order of the three phases A, B, and C. The six active vectors are 001, 010, 011, 100, 101, and 110, and the two zero vectors are 000 and 111. The active vector corresponds to the case where at least one high-side switching element and at least one low-side switching element are turned on, and the zero vector corresponds to the case where all the three high-side switching elements are turned on or all the three low-side switching elements are turned on. Only in the time windows corresponding to the active vectors (that is, active vector time windows) can the corresponding current sampling values be acquired based on the voltage signals across the current sense resistor 201. In the time windows corresponding to the zero vectors (that is, zero vector time windows), the current sampling values cannot be acquired. During SVPWM, the time windows may be divided into the active vector time windows and the zero vector time windows.

In some examples, the controller 220 acquires the corresponding current sampling value based on the voltage signal across the current sense resistor 201 by converting the voltage signal into the current sampling value through a differential amplifier circuit 221.

As shown in FIG. 3, the differential amplifier circuit 221 includes a low-pass filter 2211 and a gain amplifier 2212. The low-pass filter 2211 has an adjustable cutoff frequency and is used for suppressing high-frequency switching noise. The gain amplifier 2212 can amplify the amplitude of the input signal. The amplification factor of the amplitude of the input signal by the gain amplifier 2212 is a fixed value determined based on the hardware circuit. In the present application, the input signal of the gain amplifier 2212 is a voltage signal, and the gain amplifier 2212 amplifies the amplitude of the input voltage signal. A first voltage U1 is inputted at one input terminal of the differential amplifier circuit 221, and a second voltage U1' is inputted at the other input terminal of the differential amplifier circuit 221. After the inputs at the two input terminals pass through the gain amplifier 2212, the current I is outputted at the output terminal. The first voltage U1 and the second voltage U1' are the voltage signals across the current sense resistor 201, and the output current I is the current sampling value obtained by converting the voltage signals.

In some examples, 100 is used as an example for description, "1" in 100 represents that the high-side switching element corresponding to phase A is turned on, that is, the switching element Q1 is turned on, and "0"s represent that the low-side switching elements corresponding to phases B and C are turned on, that is, the switching elements Q4 and Q2 are turned on. In this case, the bus current flows in from phase A and then flows out from phases B and C. Therefore, the A-phase current la may be acquired based on the voltage signal across the current sense resistor 201. Specifically, the direction in which the current flows into the windings of the brushless electric motor 140 is positive, and the direction in which the current flows out of the windings of the brushless electric motor 140 is negative. If the bus current value obtained based on the voltage signal across the current sense resistor 201 is equal to the phase current value in different active vector time windows, then the phase current can be acquired based on the current sense resistor 201 in different active vector time windows.

As shown in Table 1 below, Table 1 shows the phase currents that can be acquired in different active vector time windows. In Table 1, the positive and negative signs represent the current flow directions.

**Table 1**

| | | | | | | |
|---|---|---|---|---|---|---|
| Active vector | 001 | 010 | 011 | 100 | 101 | 110 |
| Sampled current | +Ic | +Ib | -la | +la | -Ib | -Ic |

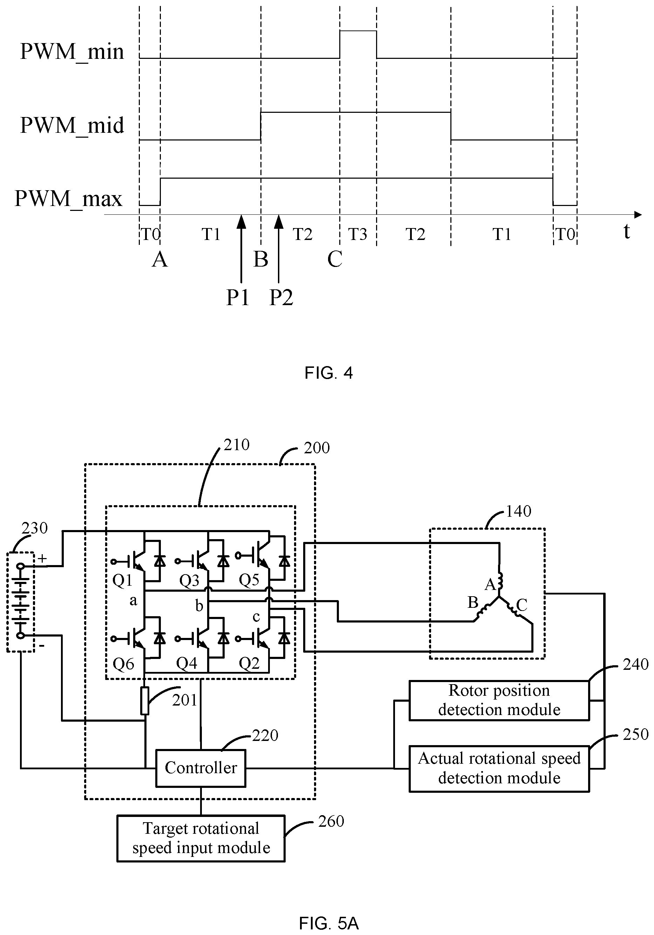

As shown in FIG. 4, the current sampling time windows within a PWM cycle are shown. The three PWM signals within this cycle are sorted from top to bottom in the ascending order of duty cycles and are PWM_min, PWM_mid, and PWM_max, respectively. If the vector corresponding to the time period T0 is 000 and the vector corresponding to the time period T3 is 111, then the time windows corresponding to the time periods T0 and T3 are zero vectors. If the vector corresponding to the time period T1 is 001 and the vector corresponding to the time period T2 is 011, then the time windows corresponding to the time periods T1 and T2 are active vectors, and sampling needs to be performed within the time periods T1 and T2. Since only one current sense resistor 201 is used for sampling, to acquire the phase currents of two different phases, sampling needs to be performed in the adjacent time periods T1 and T2 with different active vectors. That is, the time period T1 is the first active vector time window, and the time period T2 is the second active vector time window. If the two endpoints of the time period T1 are points A and B, and the two endpoints of the time period T2 are points B and C, then the first sampling point P1 is located between points A and B, and the second sampling point P2 is located between points B and C.

During the sampling process, dead time, conduction time, and current stabilization time need to be avoided. The dead time refers to the time interval of the switching on of the high-side switching element and the low-side switching element of the same phase. The conduction time refers to the time required for three of the switching elements Q1 to Q6 to be turned on. The current stabilization time refers to the time required for the current and voltage to reach a stable state after a period of fluctuation due to the presence of the inductor and capacitor (not shown in the figure) in the circuit loop when the switching elements switch conduction states. Therefore, only when the duration of the active vector time window is greater than the sum of the dead time, the conduction time, and the current stabilization time can the valid phase current be sampled in the active vector time window. In the following description of the present application, the sum of the dead time, the conduction time, and the current stabilization time is represented by the minimum sampling time window.

In some examples, if the active vector time window is less than or equal to the minimum sampling time window and the PWM signal is not processed, the valid phase current cannot be sampled. Two cases where the valid phase current cannot be sampled exist. If each of the two active vector time windows is less than the minimum sampling time window, then the valid phase current cannot be sampled, that is, the valid phase current cannot be sampled in the time periods T1 and T2. If one of the two active vector time windows is less than the minimum sampling time window, then only one valid phase current can be sampled, that is, the valid phase current cannot be sampled in one of the time periods T1 and T2. In this case, phase shifting of the PWM signal is required to ensure that two active vector time windows are both greater than the minimum sampling time window. The principle of phase shifting of the PWM signal and the phase shifting processes corresponding to the two cases where the valid phase current cannot be obtained have been fully disclosed to those skilled in the art, so detailed explanations are omitted here for the sake of brevity.

In some examples, when the inductance of the brushless electric motor 140 is smaller, the current change within a PWM cycle is larger. If the interval between the first sampling point P1 located between points A and B and the second sampling point P2 located between points B and C is too large, the three-phase current balance equation is not satisfied when the third phase current is reconstructed subsequently. Based on this, in the present application, the first sampling point P1 is as close as possible to the left of point B, and the second sampling point P2 is as close as possible to the right of point B.

In some examples, to ensure normal sampling, the ADC sampling hold time, the dead time, the conduction time, and the current stabilization time need to be avoided. Therefore, after the first sampling is completed, sampling is performed again only after these times. The dead time, the conduction time, and the current stabilization time occur after point B. Based on this, the time difference between the first sampling point P1 and point B is the ADC sampling hold time. The time difference between the second sampling point P2 and point B is the sum of the dead time, the conduction time, and the current stabilization time, which is the minimum sampling time window. The ADC sampling hold time refers to the time during which the sampled value is maintained after the ADC sampling is completed so that the sampled data can be processed subsequently. In the present application, if the ADC sampling acquires the voltage value across the current sense resistor 201, then this voltage value is maintained during the ADC hold time so that this voltage value can be converted into a current value subsequently.

In this case, the time difference between the first sampling point P1 and the second sampling point P2 is greater than or equal to the sum of the ADC sampling hold time, the dead time, the conduction time, and the current stabilization time. When the inductance of the brushless electric motor 140 is smaller, the minimum time difference between the first sampling point P1 and the second sampling point P2 is the sum of the ADC sampling hold time, the dead time, the conduction time, and the current stabilization time.

The ADC sampling hold time, the dead time, the conduction time, and the current stabilization time are all determined by the hardware circuit. Specifically, the ADC sampling hold time is determined by the single-chip microcomputer used in the controller 220, the dead time and the conduction time are determined by the switching elements Q1 to Q6, and the current stabilization time is determined by the inductor and capacitor in the circuit loop.

In some examples, when the inductance of the brushless electric motor 140 is less than or equal to 50 microhenries, the time difference between the first sampling point P1 and the second sampling point P2 is less than or equal to 8 microseconds. Optionally, the inductance of the brushless electric motor 140 may be 45 microhenries. Optionally, the inductance of the brushless electric motor 140 may be 40 microhenries. Optionally, the inductance of the brushless electric motor 140 may be 30 microhenries. Optionally, the time difference between the first sampling point P1 and the second sampling point P2 may be 6 microseconds. Optionally, the time difference between the first sampling point P1 and the second sampling point P2 may be 5 microseconds. Optionally, the time difference between the first sampling point P1 and the second sampling point P2 may be 2 microseconds.

In some examples, the resistance of the current sense resistor 201 is less than 5 mΩ, and the power withstand capability is not less than 150% of the peak current of the power tool 100. Optionally, the current sense resistor 201 may have a resistance of 3 mΩ. Optionally, the current sense resistor 201 may have a resistance of 2 mΩ. Optionally, the current sense resistor 201 may have a resistance of 1 mΩ. By setting the resistance of the current sense resistor 201 within the preceding range, the problems of excessive power consumption and overheating damage of the current sense resistor 201 can be avoided, and the current sense resistor 201 can match the ADC measurement range while a certain amount of noise can be suppressed. By setting the range of the power withstand capability of the current sense resistor 201, the current sense resistor 201 has a higher withstand capability, thereby ensuring the service life of the current sense resistor 201.

Based on this, after the controller 220 acquires the corresponding first phase current at the first sampling point P1 and acquires the corresponding second phase current at the second sampling point P2, the two phase currents are approximately regarded as the currents flowing through the two phases of the brushless electric motor 140 at the same moment so that the third phase current can be reconstructed based on the two phase currents and the three-phase current balance equation (that is, Kirchhoff's laws). For example, if the controller 220 acquires the A-phase current la at the first sampling point P1 and acquires the B-phase current Ib at the second sampling point P2, then the C-phase current Ic can be obtained based on la+Ib+Ic=0. Based on this, the PWM drive signal is generated to control the driver circuit 210, thereby controlling the operation of the brushless electric motor 140.

In some examples, as shown in FIG. 5A, the controller 220 is electrically connected to the current sense resistor 201, a rotor position detection module 240, an actual rotational speed detection module 250, and the driver circuit 210, respectively. The current sense resistor 201 is used for acquiring the current of the brushless electric motor 140. The rotor position detection module 240 is used for acquiring the rotor position. The actual rotational speed detection module 250 is used for acquiring the actual rotational speed of the brushless electric motor 140. The controller 220 controls the driver circuit 210 according to a detection value of the current sense resistor 201, the rotor position of the electric motor acquired by the rotor position detection module 240, and the rotational speed of the brushless electric motor 140 acquired by the actual rotational speed detection module 250. In the present application, the case where the brushless electric motor 140 is a sensorless brushless electric motor is used as an example. However, the brushless electric motor 140 may also be a sensored brushless electric motor.

The rotor position of the brushless electric motor 140 is estimated, for example, by using the back electromotive force (EMF) detection method to calculate the rotor position, so that the rotor position detection module 240 can acquire the rotor position of the brushless electric motor 140. The rotor position detection module 240 may be built in the controller 220 or may be externally disposed on the controller 220.

The actual rotational speed detection module 250 is associated with and connected to the brushless electric motor 140 and is used for detecting the actual rotational speed of the brushless electric motor 140. The actual rotational speed detection module 250 does not include a sensor, and an electrical signal outputted by the brushless electric motor 140 is estimated to obtain the rotational speed. For example, the current of the brushless electric motor 140 is detected so that a zero crossing of a back EMF of the brushless electric motor 140 is obtained, a periodic variation law of the operation of the brushless electric motor 140 is obtained, and thus the actual rotational speed of the brushless electric motor 140 is acquired according to the periodic variation law. The actual rotational speed detection module 250 may be built in the controller 220 or may be externally disposed on the controller 220.

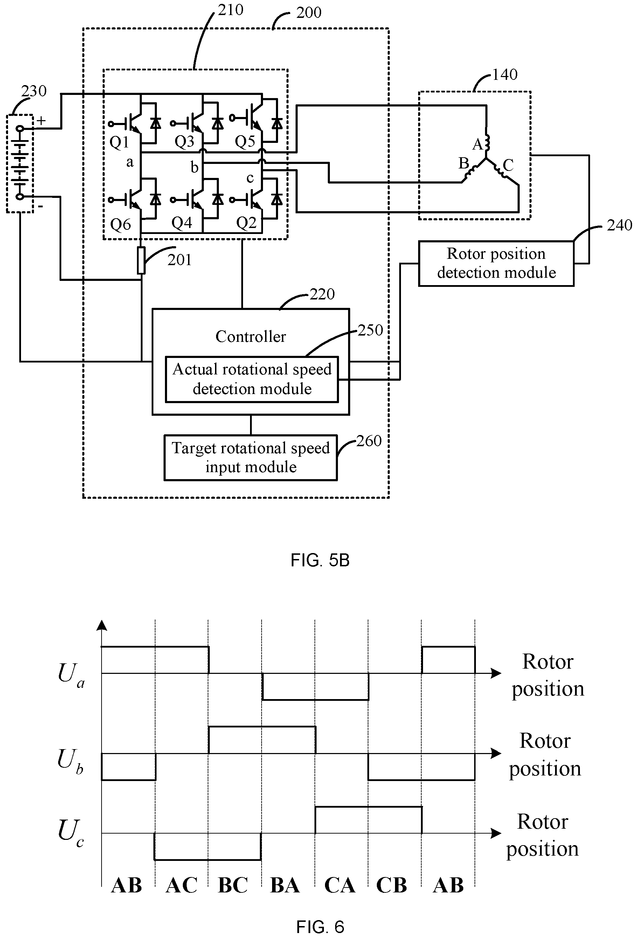

In addition, in some examples, as shown in FIG. 5B, the actual rotational speed detection module 250 may be built in the controller 220. The actual rotational speed detection module 250 is directly connected to the rotor position detection module 240, and the corresponding actual rotational speed of the brushless electric motor 140 is calculated based on the rotor position information detected by the rotor position detection module 240. The present application does not limit the method of calculating the actual rotational speed based on the rotor position information. The actual rotational speed may be calculated in a method such as the frequency measurement method, the pulse width measurement method, the combined method, or rotational speed estimation based on the motor electrical equation (the voltage, current, and back EMF). Any other method in which the actual rotational speed can be calculated based on the rotor position information can also be adopted.

As shown in FIG. 5A, the driving system of the brushless electric motor 140 further includes a target rotational speed input module 260 that is used for the user to input a target rotational speed of the brushless electric motor 140 and is associated with and connected to an operating device on the power tool 100, where the operating device may be an operating switch or the like for the user to adjust the speed.

The current sense resistor 201 is associated with and connected to the brushless electric motor 140 and is used for acquiring the operating current of the brushless electric motor 140, which is the phase current of the brushless electric motor 140. The current sense resistor 201 transmits the acquired current of the brushless electric motor 140 to the controller 220. The process of acquiring the phase current of the brushless electric motor 140 based on the current sense resistor 201 is as described above in the present application, and the details are not repeated here.

The controller 220 of the present application is configured to acquire the real-time load parameter of the brushless electric motor 140, compare the real-time load parameter with a preset threshold, and control the driver circuit 210 in the first control manner or the second control manner according to the comparison result. The first control manner is as follows: the controller 220 controls the driver circuit 210 such that the voltage of the brushless electric motor 140 varies in a square wave manner following the rotor position of the brushless electric motor 140. The second control manner is as follows: the controller 220 controls the driver circuit 210 such that the voltage of the brushless electric motor 140 varies in a sinusoidal wave manner or a saddle waveform manner following the rotor position of the brushless electric motor 140. The first control manner is a square wave control manner, and the second control manner is a field-oriented control (FOC) manner. Optionally, the real-time load parameter of the brushless electric motor 140 includes at least one of the following parameters: the electric motor rotational speed, the duty cycle, the load, the phase current, the bus current, the electric motor temperature, the driver circuit temperature, the battery pack voltage, or the battery pack state of power (SoP).

In the first control manner, the controller 220 outputs a first PWM control signal to the driver circuit 210; and in the second control manner, the controller 220 outputs a second PWM control signal to the driver circuit 210, where a duty cycle of the second PWM control signal varies with the rotor position of the brushless electric motor 140.

The first control manner is as follows: as shown in FIG. 6, the controller 220 controls the driver circuit 210 such that the voltage of the brushless electric motor 140 varies in a square wave manner following the rotor position of the electric motor.

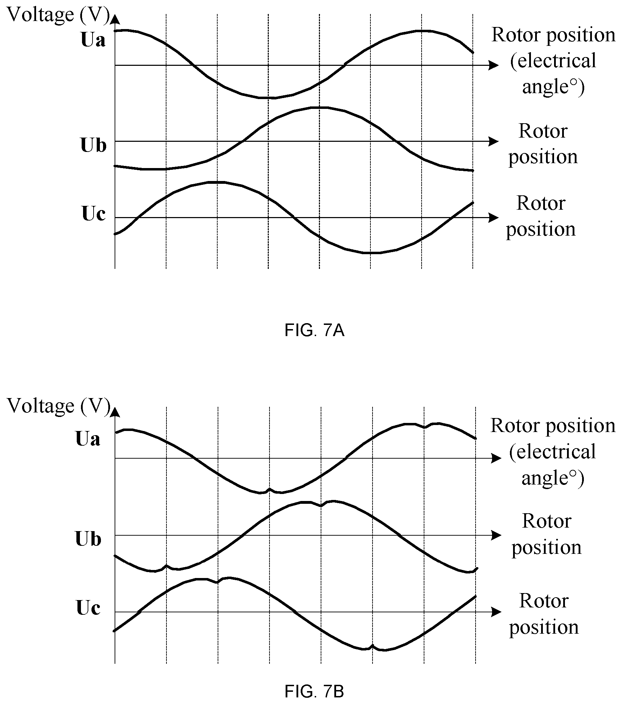

In the second control manner, the controller 220 controls the driver circuit 210 such that the voltage of the brushless electric motor 140 varies in a sinusoidal wave manner or a saddle waveform manner following the rotor position of the electric motor. As shown in FIG. 7A, the voltage of the brushless electric motor 140 varies in a sinusoidal wave manner. As shown in FIG. 7B, the voltage of the brushless electric motor 140 varies in a saddle waveform manner.

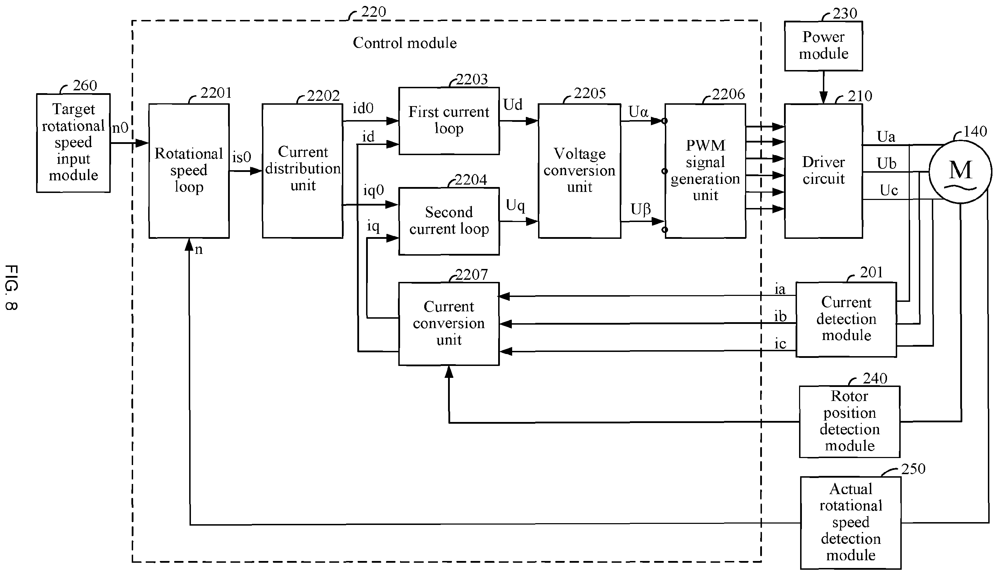

In some examples, a control system in the second control manner is shown in FIG. 8. FIG. 8 illustrates the example in which the actual rotational speed detection module 250 is directly associated with and connected to the brushless electric motor 140. The actual rotational speed detection module 250 in FIG. 8 may also be directly connected to the rotor position detection module 240.

The control system includes a control module 220 (a module corresponding to the controller 220), the power module 230, the driver circuit 210, the target rotational speed input module 260, the actual rotational speed detection module 250, the rotor position detection module 240, a current detection module (that is, the current sense resistor) 201, and the brushless electric motor 140. Functions, structures, and compositions of the assemblies in this example are the same as or similar to functions, structures, and compositions of the assemblies in the preceding example shown in FIG. 5A, which are not repeated herein. The difference is that, more specifically, the control module 220 is adopted in this example and mainly includes a rotational speed loop 2201, a current distribution unit 2202, a first current loop 2203, a second current loop 2204, a voltage conversion unit 2205, a current conversion unit 2207, and a PWM signal generation unit 2206.

The rotational speed loop 2201 is associated with and connected to the target rotational speed input module 260 and the actual rotational speed detection module 250. The rotational speed loop 2201 is configured to acquire a target rotational speed n0 of the brushless electric motor 140 set by the user from the target rotational speed input module 260 and an actual rotational speed n of the brushless electric motor 140 detected by the actual rotational speed detection module 250. The target rotational speed input module 260 is associated with and connected to a speed regulation operating device of the power tool.

The rotational speed loop 2201 is used for generating a target current is0 according to the target rotational speed n0 and the actual rotational speed n of the brushless electric motor 140. Specifically, the rotational speed loop 2201 can generate the target current is0 through comparison and adjustment according to the target rotational speed n0 and the actual rotational speed n of the brushless electric motor 140, and the target current is0 is used for making the actual rotational speed n of the brushless electric motor 140 approach the target rotational speed n0.

The current distribution unit 2202 is connected to the rotational speed loop 2201 and used for distributing a direct-axis target current id0 and a quadrature-axis target current iq0 according to the target current is0. The target current is0, the direct-axis target current id0, and the quadrature-axis target current iq0 are each a vector with the magnitude and the direction. The direct-axis target current id0 and the quadrature-axis target current iq0 are perpendicular to each other, and the target current is0 is a resultant of the direct-axis target current id0 and the quadrature-axis target current iq0.

The current conversion unit 2207 acquires three phases of currents ia, ib, and ic and performs current conversion such that the three phases of currents ia, ib, and ic are converted into two phases of currents, which are a direct-axis actual current id and a quadrature-axis actual current iq, respectively. The current detection module 201 transmits the detected three phases of currents ia, ib, and ic in the actual operation of the brushless electric motor 140 to the current conversion unit 2207 in the control module 220. Optionally, the current conversion unit 2207 includes the Park transform and the Clark transform.

The first current loop 2203 is connected to the current distribution unit 2202 and the current conversion unit 2207, acquires the direct-axis target current id0 and the direct-axis actual current id, and generates the first voltage adjustment amount Ud according to the direct-axis target current id0 and the direct-axis actual current id. The second current loop 2204 is connected to the current distribution unit 2202 and the current conversion unit 2207, acquires the quadrature-axis target current iq0 and the quadrature-axis actual current iq, and generates the second voltage adjustment amount Uq according to the quadrature-axis target current iq0 and the quadrature-axis actual current iq.

The first voltage adjustment amount Ud and the second voltage adjustment amount Uq further need to be converted into control signals for controlling the driver circuit 210 after some conversions and calculations. The first voltage adjustment amount Ud and the second voltage adjustment amount Uq are sent to a control signal generation unit for conversion and calculation. In this example, the control signal generation unit includes the voltage conversion unit 2205 and the PWM signal generation unit 2206.

The voltage conversion unit 2205 is connected to the first current loop 2203 and the second current loop 2204, acquires the first voltage adjustment amount Ud, the second voltage adjustment amount Uq, and the rotor position of the brushless electric motor 140 from the rotor position detection module 240, converts the first voltage adjustment amount Ud and the second voltage adjustment amount Uq into intermediate amounts Uα and Uβ related to the three phases of voltages Ua, Ub, and Uc applied to the brushless electric motor 140, and outputs the intermediate amounts Uα and Uβ to the PWM signal generation unit 2206. According to the intermediate amounts Uα and Uβ, the PWM signal generation unit 2206 generates PWM signals for controlling the switching elements in the driver circuit 210, thereby enabling the power module 230 to output the three phases of voltages Ua, Ub, and Uc, which are applied to the windings of the brushless electric motor 140. Optionally, the voltage conversion unit 2205 includes the inverse Park transform and the inverse Clarke transform.

In some examples, the preset threshold includes a first preset threshold and a second preset threshold, where the first preset threshold is different from the second preset threshold. The hysteresis is configured for the first preset threshold and the second preset threshold so that the brushless electric motor 140 can be prevented from frequently switching between the first control manner and the second control manner and thus prevented from oscillating.

When the driver circuit 210 drives the brushless electric motor 140 based on the first control manner, the first preset threshold is used as a trigger condition for switching to the second control manner to drive the brushless electric motor 140. When the driver circuit 210 drives the brushless electric motor 140 based on the second control manner, the second preset threshold is used as a trigger condition for switching to the first control manner to drive the brushless electric motor 140.

In some examples, in the case where the driver circuit 210 drives the brushless electric motor 140 based on the first control manner, when the real-time load parameter is greater than the first preset threshold, the control manner is switched to the second control manner. In the case where the driver circuit 210 drives the brushless electric motor 140 based on the second control manner, when the real-time load parameter is less than the second preset threshold, the control manner is switched to the first control manner.

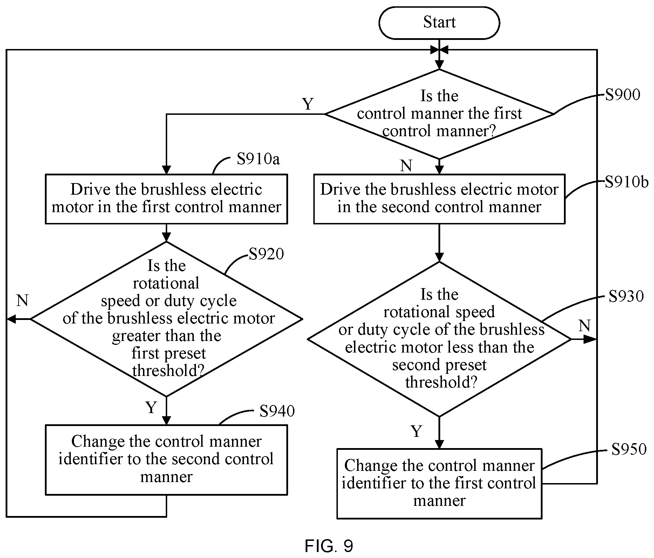

In some examples, as shown in FIG. 9, the case where the real-time load parameters are the rotational speed and duty cycle of the brushless electric motor 140 is used as an example for description. Since the rotational speed of the brushless electric motor 140 is positively correlated with the duty cycle, the rotational speed or duty cycle may be compared with the preset threshold in the same manner. The first preset threshold and the second preset threshold corresponding to the rotational speed are different from the first preset threshold and the second preset threshold corresponding to the duty cycle. The first preset threshold corresponding to the rotational speed is greater than the second preset threshold corresponding to the rotational speed, and the first preset threshold corresponding to the duty cycle is greater than the second preset threshold corresponding to the duty cycle.

In step S900, whether the control manner identifier is the first control manner is determined.

The controller 220 first acquires the control manner identifier of the brushless electric motor 140. When the control manner identifier is the first control manner, step S910a is performed; otherwise, step S910b is performed. The control manner identifier is a preset manner for driving the brushless electric motor 140 to operate. The control manner identifier may be the first control manner or the second control manner. In addition, the control manner identifier may be updated cyclically according to subsequent processes.

In step S910a, the brushless electric motor is driven in the first control manner.

After it is determined that the control manner identifier is the first control manner, the brushless electric motor 140 is driven in the first control manner, and step S920 is performed to determine the relationship between the rotational speed or duty cycle of the brushless electric motor 140 and the preset threshold.

In step S910b, the brushless electric motor is driven in the second control manner.

After it is determined that the control manner identifier is not the first control manner, the brushless electric motor 140 is driven in the second control manner, and step S930 is performed to determine the relationship between the rotational speed (or the duty cycle) of the brushless electric motor 140 and the preset threshold.

In step S920, whether the rotational speed or duty cycle of the brushless electric motor is greater than the first preset threshold is determined.

The controller 220 determines the relationship between the rotational speed or duty cycle of the brushless electric motor 140 and the first preset threshold. When the rotational speed or duty cycle of the brushless electric motor 140 is greater than the first preset threshold, step S940 is performed. Otherwise, step S900 is performed to restart the determination of the control manner identifier.

In step S930, whether the rotational speed or duty cycle of the brushless electric motor is less than the second preset threshold is determined.

The controller 220 determines the relationship between the rotational speed or duty cycle of the brushless electric motor 140 and the second preset threshold. When the rotational speed or duty cycle of the brushless electric motor 140 is less than the second preset threshold, step S950 is performed. Otherwise, step S900 is performed to restart the determination of the control manner identifier.

In step S940, the control manner identifier is changed to the second control manner.

When the brushless electric motor 140 is driven in the first control manner and the rotational speed or duty cycle of the brushless electric motor 140 is greater than the first preset threshold, the control manner identifier is changed to the second control manner and step S900 is performed so that the brushless electric motor 140 can be driven in the second control manner.

In step S950, the control manner identifier is changed to the first control manner.

When the brushless electric motor 140 is driven in the second control manner and the rotational speed or duty cycle of the brushless electric motor 140 is less than the second preset threshold, the control manner identifier is changed to the first control manner and step S900 is performed so that the brushless electric motor 140 can be driven in the first control manner.

Since the first preset threshold is greater than the second preset threshold, the brushless electric motor 140 is driven in the first control manner when the rotational speed or duty cycle is lower, and the brushless electric motor 140 is driven in the second control manner when the rotational speed or duty cycle is higher. That is, square wave driving is adopted when the rotational speed or duty cycle is lower, and FOC driving is adopted when the rotational speed or duty cycle is higher. Therefore, in the low-speed stage where it is relatively difficult for the current sense resistor 201 to accurately detect the current, square wave driving is adopted. On the one hand, accurate current sampling of the brushless electric motor 140 can be ensured; on the other hand, the noise of the brushless electric motor 140 can be reduced, the control stability can be enhanced, and the load-carrying capability can be enhanced. FOC driving is adopted in the high-speed stage so that the noise of the brushless electric motor 140 can be reduced and the working efficiency of the brushless electric motor 140 can be effectively improved.

In some examples, two real-time load parameters and multiple preset thresholds may be used as conditions for switching between the first control manner and the second control manner. The multiple preset thresholds may include a first parameter preset threshold and a second parameter preset threshold, thereby switching between the first control manner and the second control manner based on the relationship between the first parameter and the first parameter preset threshold and the relationship between the second parameter and the second parameter preset threshold. For example, the first parameter preset threshold includes the first preset threshold of the first parameter and the second preset threshold of the first parameter, and the second parameter preset threshold includes the first preset threshold of the second parameter and the second preset threshold of the second parameter. Moreover, the hysteresis is configured for multiple preset thresholds of the first parameter and multiple preset thresholds of the second parameter.

In some examples, the case where two real-time load parameters are the rotational speed (or the duty cycle) of the brushless electric motor 140 and the load is used as an example for description. The rotational speed (or the duty cycle) of the brushless electric motor 140 includes the first preset threshold of the first parameter, the second preset threshold of the first parameter, and the third preset threshold of the first parameter. The first preset threshold of the first parameter is less than the second preset threshold of the first parameter, and the third preset threshold of the first parameter is less than the first preset threshold of the first parameter. That is, the rotational speed (or the duty cycle) of the brushless electric motor 140 is divided into three segments: high speed, medium speed, and low speed. The second preset threshold of the first parameter is the maximum rotational speed of the brushless electric motor 140. For the load of the brushless electric motor 140, the first preset threshold of the second parameter and the second preset threshold of the second parameter are included. The first preset threshold of the second parameter is less than the second preset threshold of the second parameter. That is, the load of the brushless electric motor 140 is divided into two segments: a light load and a heavy load.

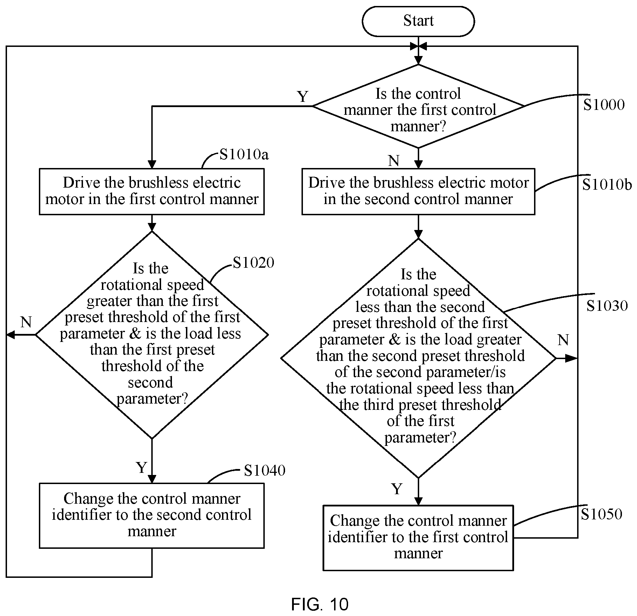

As shown in FIG. 10, the process of switching between the first control manner and the second control manner based on two real-time load parameters is described below.

In step S1000, whether the control manner identifier is the first control manner is determined.

The controller 220 first acquires the control manner identifier of the brushless electric motor 140. When the control manner identifier is the first control manner, step S1010a is performed; otherwise, step S1010b is performed. The control manner identifier is a preset manner for driving the brushless electric motor 140 to operate. The control manner identifier may be the first control manner or the second control manner. In addition, the control manner identifier may be updated cyclically according to subsequent processes.

In step S1010a, the brushless electric motor is driven in the first control manner.

After it is determined that the control manner identifier is the first control manner, the brushless electric motor 140 is driven in the first control manner, and step S1020 is performed to determine the relationship between the rotational speed (or the duty cycle) of the brushless electric motor 140 and the preset threshold and the relationship between the load of the brushless electric motor 140 and the preset threshold.

In step S1010b, the brushless electric motor is driven in the second control manner.

After it is determined that the control manner identifier is not the first control manner, the brushless electric motor 140 is driven in the second control manner, and step S1030 is performed to determine the relationship between the rotational speed (or the duty cycle) of the brushless electric motor 140 and the preset threshold and the relationship between the load of the brushless electric motor 140 and the preset threshold.

In step S1020, whether the rotational speed (or duty cycle) of the brushless electric motor is greater than the first preset threshold of the first parameter and the load is less than the first preset threshold of the second parameter is determined.

The controller 220 determines the relationship between the rotational speed (or the duty cycle) of the brushless electric motor 140 and the first preset threshold of the first parameter and the relationship between the load of the brushless electric motor 140 and the first preset threshold of the second parameter. When the rotational speed (or the duty cycle) of the brushless electric motor 140 is greater than the first preset threshold of the first parameter and the load of the brushless electric motor 140 is less than the first preset threshold of the second parameter, that is, in the case where the brushless electric motor 140 has a high rotational speed and a light load, step S1040 is performed. Otherwise, step S1000 is performed to restart the determination of the control manner identifier.

In step S1030, whether the rotational speed (or duty cycle) of the brushless electric motor is less than the second preset threshold of the first parameter and the load is greater than the second preset threshold of the second parameter is determined or whether the rotational speed (or duty cycle) of the brushless electric motor is less than the third preset threshold of the first parameter is determined.

The controller 220 determines the relationship between the rotational speed (or the duty cycle) of the brushless electric motor 140 and the second preset threshold of the first parameter and the relationship between the load of the brushless electric motor 140 and the second preset threshold of the second parameter. Alternatively, the controller 220 determines the relationship between the rotational speed (or the duty cycle) of the brushless electric motor 140 and the third preset threshold of the first parameter.

When the rotational speed (or the duty cycle) of the brushless electric motor 140 is less than the second preset threshold of the first parameter and the load of the brushless electric motor 140 is greater than the second preset threshold of the second parameter, step S1050 is performed. Otherwise, step S1000 is performed to restart the determination of the control manner identifier. Since the second preset threshold of the first parameter is the maximum rotational speed, the brushless electric motor 140 has a heavy load at any rotational speed.

When the rotational speed (or the duty cycle) of the brushless electric motor 140 is less than the third preset threshold of the first parameter, that is, in the case where the brushless electric motor 140 has a low rotational speed at any load, step S1050 is performed. Otherwise, step S1000 is performed to restart the determination of the control manner identifier.

In step S1040, the control manner identifier is changed to the second control manner.

In the case where the brushless electric motor 140 is driven in the first control manner, when the rotational speed (or the duty cycle) of the brushless electric motor 140 is greater than the first preset threshold of the first parameter and the load of the brushless electric motor 140 is less than the first preset threshold of the second parameter, the control manner identifier is changed to the second control manner and step S1000 is performed so that the brushless electric motor 140 can be driven in the second control manner.

In step S1050, the control manner identifier is changed to the first control manner.

In the case where the brushless electric motor 140 is driven in the second control manner, when the rotational speed (or the duty cycle) of the brushless electric motor 140 is less than the second preset threshold of the first parameter and the load of the brushless electric motor 140 is greater than the second preset threshold of the second parameter, or when the rotational speed (or the duty cycle) of the brushless electric motor 140 is less than the third preset threshold of the first parameter, the control manner identifier is changed to the first control manner and step S1000 is performed so that the brushless electric motor 140 can be driven in the first control manner.

Therefore, as can be seen from the preceding switching conditions, when the rotational speed or duty cycle of the brushless electric motor 140 is higher and the load is smaller, the brushless electric motor 140 is driven in the second control manner. When the rotational speed or duty cycle of the brushless electric motor 140 is lower (regardless of whether the load is heavy or light), or when the load of the brushless electric motor 140 is larger (regardless of whether the rotational speed is high or low), the brushless electric motor 140 is driven in the first control manner. Therefore, square wave driving is adopted in the low-speed stage where it is relatively difficult for the current sense resistor 201 to accurately detect the current. Adopting square wave driving during a heavy-load stage enables the brushless electric motor 140 to have higher torque output, faster response speed, and stronger robustness. FOC driving is adopted during a high-speed light-load stage so that the current sense resistor 201 can detect the current well, and the brushless electric motor 140 has lower losses and noise, as well as more accurate rotational speed or torque control.

Therefore, in the present application, one or two real-time load parameters and corresponding preset thresholds are used to switch between the first control manner and the second control manner so that the brushless electric motor can be driven in a more suitable control manner, thereby improving the performance of the brushless electric motor in many aspects.

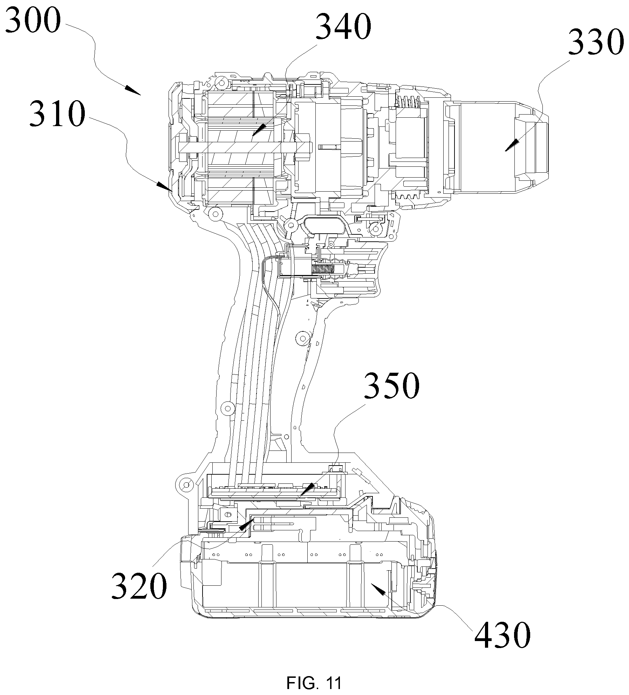

In another example, FIG. 11 shows a power tool 300 as an example of the present application. The power tool 300 shown in FIG. 11 is an electric drill. In other examples, the power tool 300 may also be a handheld power tool, such as a drill, a hedge trimmer, or a sander. Alternatively, the power tool 300 may be a table tool, such as a table saw or a miter saw. Alternatively, the power tool 300 may be a push power tool, such as a push mower or a push snow thrower. Alternatively, the power tool 300 may be a riding power tool, such as a riding mower, a riding vehicle, or an all-terrain vehicle. Alternatively, the power tool 300 may be a robotic tool, such as a robotic mower or a robotic snow thrower. Any other types of power tools that can adopt the substantial content of the technical solutions disclosed below are within the scope of the present application.

As shown in FIG. 11, the power tool 300 includes a housing 310, a power interface 320, a working head 330, an electric motor 340, and a circuit board assembly 350. The housing 310 constitutes a body of the power tool 300, connects or supports the preceding components, and forms an accommodation space capable of accommodating or partially accommodating the preceding components. The power interface 320 is used for connecting a power supply to supply power to the electric motor 340. The working head 330 is a component of the power tool 300 that actually performs an operation such as cutting, fastening, grinding, or impacting. The electric motor 340 is at least partially disposed in the housing 310. The electric motor 340 includes a stator and a rotor and is configured to directly or indirectly drive the working head 330 to operate. The circuit board assembly 350 is electrically connected to the electric motor 340 and the power interface 320.

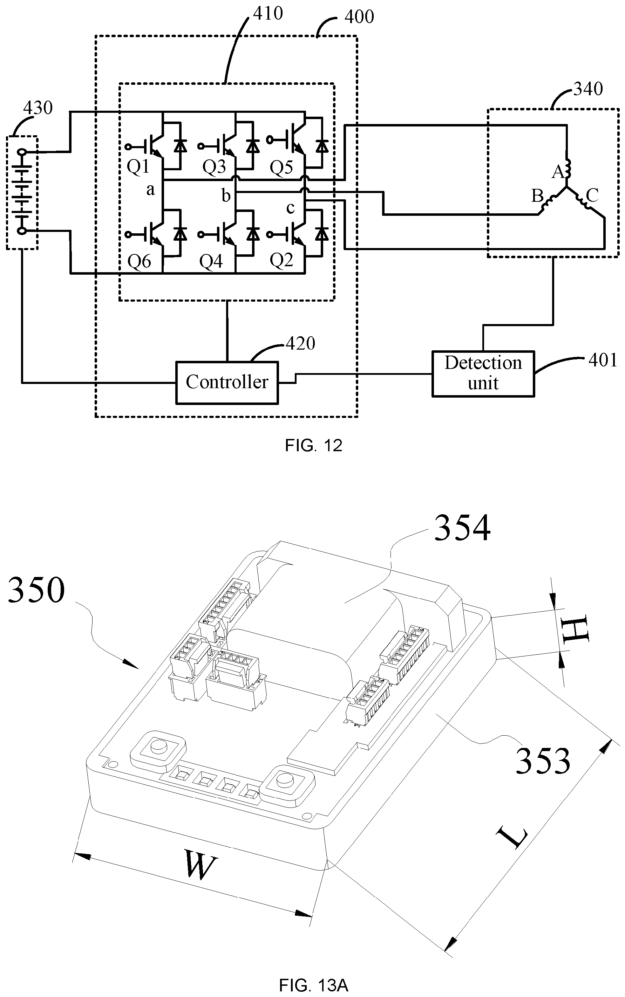

Referring to the circuit block diagram of the power tool 300 shown in FIG. 12, the circuits and related components corresponding to the circuit block diagram of the power tool 300 are all disposed on the circuit board assembly 350. The driving system of the electric motor 340 may include at least a control circuit 400 for controlling the working state of the electric motor 340. The control circuit 400 includes a driver circuit 410 and a controller 420, and the controller 420 is connected to at least the driver circuit 410. The driving system of the electric motor 340 further includes a power module 430 and a current sense resistor 402. The power module 430 supplies power to the electric motor 340 through a DC bus. A detection unit 401 is connected to the controller 420. The detection unit 401 is used for detecting the working parameter of the power tool 300 and transmitting the detected working parameter to the controller 420. The circuit containing the detection unit 401 is a detection circuit 401. The working parameter includes at least the voltage, temperature, and current of the power tool 300. The voltage, temperature, and current of the power tool 300 include the current, temperature, and voltage of the electric motor 340, the voltage and current of the power module 430, the temperature of the controller 420, and the like. The detection unit 401 mainly detects the current, temperature, and voltage of the electric motor 340.

The electric motor 340 is a brushless DC motor. In the present application, the brushless DC motor may be an inrunner or an outrunner. The electric motor 340 includes at least three-phase stator windings A, B, and C which may adopt a star connection or a delta connection.

In some examples, the power module 430 may optionally be an AC power supply, that is, AC mains power of 120 V or 220 V may be connected through a power interface. In some examples, the power module 430 may optionally be a battery pack composed of a group of battery cells. For example, the battery cells may be connected in series into a single power supply branch to form a 1P battery pack. In the present application, the case where the power module 430 is a battery pack 430 is used as an example for specific description. An output voltage of the battery pack 430 is changed by a specific power supply control module such as a DC-DC module so that a power supply voltage suitable for the driver circuit 410 and the electric motor 340 is outputted to supply power to the driver circuit 410 and the electric motor 340. It is to be understood by those skilled in the art that the DC-DC module is a mature circuit structure and may be selected according to specific parameter requirements of the power tool.

The driver circuit 410 is electrically connected to the stator windings A, B, and C of the electric motor 340 and used for transmitting the current from the power module 430 to the stator windings A, B, and C to drive the electric motor 340 to rotate. In some examples, the driver circuit 410 includes multiple switching elements Q1, Q2, Q3, Q4, Q5, and Q6. Q1, Q3, and Q5 are high-side switching elements, and Q2, Q4, and Q6 are low-side switching elements. Any phase of stator winding of the electric motor 340 is connected to one high-side switching element and one low-side switching element. The switching elements Q1 to Q6 are electrically connected between the battery pack 430 and the electric motor 340 to convert DC power received from the battery pack 430 into three-phase AC power to drive the electric motor 340 to operate.

The gate terminal of each switching element in the driver circuit 410 is electrically connected to the controller 420 and is configured to receive the control signal from the controller 420. The controller 420 may output the control signal to control the switching element in the driver circuit 410 to be turned on, so as to form a freewheeling state. A drain or a source of each switching element is connected to the stator winding A, B, or C of the electric motor 340. The switching elements Q1 to Q6 receive control signals from the controller 420 to change their respective on states, thereby changing the current loaded to the stator windings A, B, and C of the electric motor 340 by the power module 430. In some examples, the driver circuit 410 may be a three-phase bridge driver circuit including six controllable semiconductor power devices (such as FETs, BJTs, or IGBTs). It is to be understood that the preceding switching elements may be any other types of solid-state switches, such as IGBTs or BJTs.

The controller 420 is a dedicated controller, such as a dedicated control chip (for example, an MCU). The controller 420 is integrated with a signal processing unit. The signal processing unit is configured to process acquired related parameter signals and has functions of calculation, comparison, and determination. After the signal processing unit processes the signals, the signal processing unit can generate control signals and output the control signals to the driver circuit 410, thereby driving the electric motor 340 to operate. That is, the controller 420 controls multiple switching elements Q1 to Q6 according to the detected working parameter of the power tool 300 (that is, the electric motor 340) to control the battery pack 430 to supply electric power to the electric motor 340.

As shown in FIG. 12, to drive the electric motor 340 to operate, the driver circuit 410 has multiple driving states, and in different driving states, the electric motor 340 may have different rotational speeds or different rotation directions. In the present application, the process is not described in detail in which the controller 420 controls the driver circuit 410 to change between different driving states so that the electric motor 340 has different rotational speeds or different rotation directions.

In some examples, the voltage of the battery pack 430 is greater than or equal to 4 V and less than or equal to 80 V. Optionally, the voltage of the battery pack 430 is 12 V. Optionally, the voltage of the battery pack 430 is 16 V. Optionally, the voltage of the battery pack 430 is 20 V. Optionally, the voltage of the battery pack 430 is 48 V. Optionally, the voltage of the battery pack 430 is 56 V.

To reduce the volume of the circuit board assembly 350 while ensuring that the circuit board assembly 350 has higher power, certain improvements are made to the process of the circuit board assembly 350 or electronic components 352 on the circuit board assembly 350 so that the circuit board assembly 350 has a high power density, which includes three aspects: a high gravimetric power density, a high volumetric power density, and a high areal power density. The circuit board assembly 350 includes a metal housing 353, at least one printed circuit board 351, and multiple electronic components 352 disposed on the printed circuit board 351.

The gravimetric power density refers to the ratio of the maximum continuous output power of the power tool 300 to the weight of the circuit board assembly 350. Optionally, the weight of the circuit board assembly 350 is the total system weight. The circuit board assembly 350 includes the printed circuit board 351, the multiple electronic components 352, and the metal housing 353. The weight of the circuit board assembly 350 is the sum of the weights of all the components, including the printed circuit board 351, the multiple electronic components 352, and the metal housing 353. Optionally, the weight of the circuit board assembly 350 may be the net weight, that is, only including the weight of the printed circuit board 351. The multiple electronic components 352 are disposed on the printed circuit board 351. In this case, the weight of the circuit board assembly 350 is the sum of the weight of the printed circuit board 351 and the weight of the multiple electronic components 352.

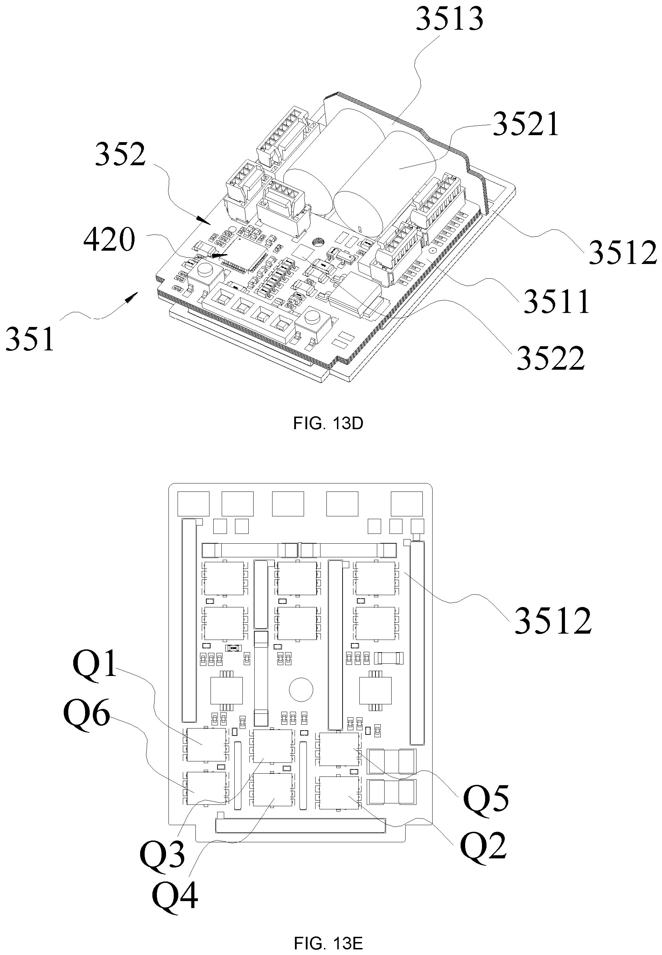

The volumetric power density refers to the ratio of the maximum continuous output power of the power tool 300 to the volume of the circuit board assembly 350. Optionally, the volume of the circuit board assembly 350 refers to the product of the maximum external dimensions of the circuit board assembly 350 in the three dimensions of the length L, the width W, and the height H. That is, as shown in FIG. 13A, the volume of the circuit board assembly 350 is the product of the maximum external dimensions of the metal housing 353 in the dimensions of the length L, the width W, and the height H after the metal housing 353 encloses the printed circuit board 351 and the multiple electronic components 352. The metal housing 353 is a regular cuboid. If the shape of the metal housing 353 is irregular, the volume of the circuit board assembly 350 corresponds to the volume of a cuboid circumscribed about the metal housing 353. Optionally, the volume of the circuit board assembly 350 may exclude the metal housing 353. The volume of the circuit board assembly 350 refers to the volume of the printed circuit board 351, and the volume of the printed circuit board 351 includes the volume of the multiple electronic components 352 disposed on the printed circuit board 351. The electronic components 352 are always located inside the printed circuit board 351, that is, the projection of the electronic components 352 and the projection of the printed circuit board 351 on the same plane always coincide. Therefore, the volume of the circuit board assembly 350 in this case is the product of the length and width of the printed circuit board 351 and the height of the tallest electronic component 352 disposed on the printed circuit board 351.

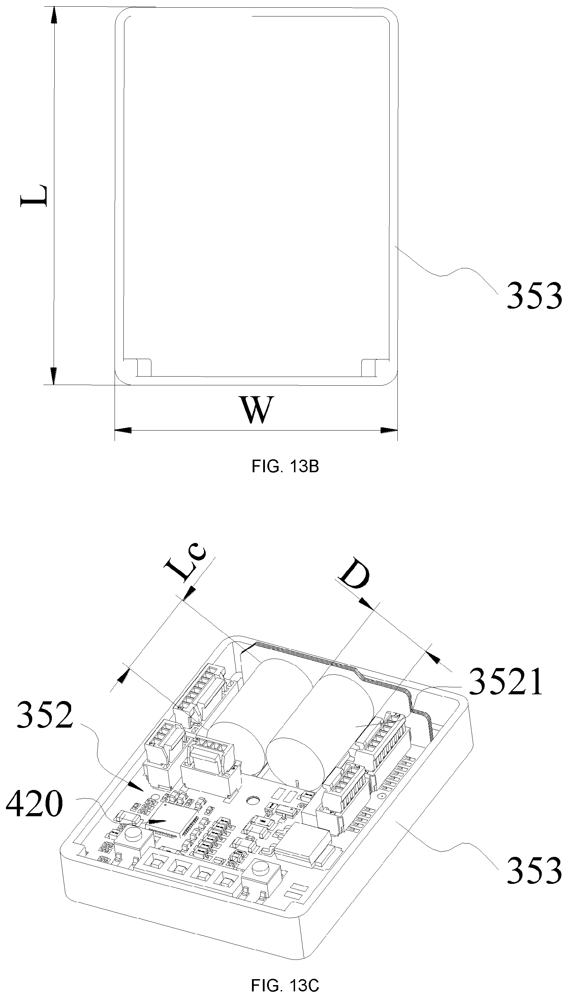

The areal power density refers to the ratio of the maximum continuous output power of the power tool 300 to the area of the circuit board assembly 350. Optionally, the area of the circuit board assembly 350 refers to the maximum vertical projection area S of the metal housing 353 on the mounting plane after the metal housing 353 encloses the printed circuit board 351 and the multiple electronic components 352. As shown in FIG. 13B, in the present application, the metal housing 353 is a regular cuboid, the area of the circuit board assembly 350 is the product of the length L and width W of the metal housing 353, and the product corresponds to the maximum vertical projection area S. If the shape of the metal housing 353 is irregular, the area of the circuit board assembly 350 corresponds to the area of the minimum rectangle circumscribed about the metal housing 353. Optionally, the area of the circuit board assembly 350 may refer to the area of the printed circuit board 351. As mentioned above, the projection of the electronic components 352 and the projection of the printed circuit board 351 on the same plane always coincide, so there is no need to consider the area of the electronic components 352 disposed on the printed circuit board 351.

The following is a detailed description of the solution that enables the circuit board assembly 350 to have a high power density.

As shown in FIGS. 13A to 13E, the circuit board assembly 350 includes the metal housing 353, at least one printed circuit board 351, the multiple electronic components 352, and plastic 354. The metal housing 353 has an opening, and at least one printed circuit board 351 is enclosed by the metal housing 353. The multiple electronic components 352 are mounted on at least one printed circuit board 351. The plastic 354 is molded onto at least one printed circuit board 351 and at least partially encloses at least one printed circuit board 351. The thermal conductivity of the metal housing 353 is greater than or equal to 90 W/(m·K). The thermal conductivity of the metal housing 353 is good. Optionally, the thermal conductivity of the metal housing 353 is 95 W/(m·K). Optionally, the thermal conductivity of the metal housing 353 is 100 W/(m·K). Optionally, the thermal conductivity of the metal housing 353 is 110 W/(m·K). In this manner, the heat generated by the multiple electronic components 352 can be effectively transferred to the outside through the metal housing 353 and then dissipated through the housing 310 of the power tool 300, resulting in good heat dissipation performance of the circuit board assembly 350.

Since the metal housing 353 has an opening, it is convenient for liquid plastic 354 to be injected. After cooling, the plastic 354 covers at least one printed circuit board 351, protecting the printed circuit board 351 and the electronic components 352 on the printed circuit board 351. The plastic 354 has a flame retardant rating of UL94-V0. In this manner, the connection strength between the printed circuit board 351 and the electronic components 352 can be enhanced, and insulation can be achieved, thereby improving insulation performance and vibration resistance. Moreover, the plastic 354 has a flame retardant rating of UL94-V0 so that the plastic 354 has excellent flame retardant properties and can effectively prevent fire.

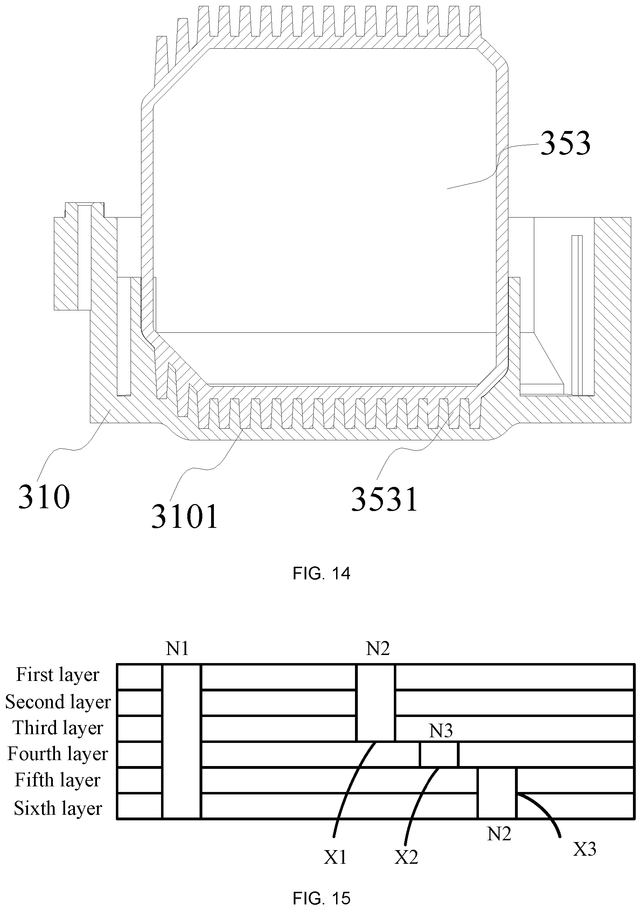

In some examples, as shown in FIG. 14, the circuit board assembly 350 includes a metal housing 353, the metal housing 353 further includes heat sink fins 3531, and the heat from the printed circuit board 351 is dissipated through the metal housing 353. A groove structure 3101 that matches the heat sink fins 3531 is formed on the inner wall of the housing 310 of the power tool 300. The heat sink fins 3531 of the metal housing 353 match the groove structure 3101 formed on the inner wall of the housing 310 for heat conduction. The heat generated by the printed circuit board 351 is conducted to the heat sink fins 3531 through the metal housing 353, and the heat sink fins 3531 directly fit the groove structure 3101, thereby conducting the heat to the housing 310 and dissipating the heat. Air has a lower thermal conductivity. The heat sink fins 3531 of the metal housing 353 are in direct contact with the housing 310 so that sufficient heat dissipation area is ensured. Moreover, the air gap between the heat dissipation surface of the metal housing 353 and the housing 310 is eliminated so that it is ensured that the heat generated by the printed circuit board 351 during operation can be quickly conducted to the housing 310 through the metal housing 353 and quickly dissipated to the outside through the housing 310, thereby effectively reducing the temperature of the printed circuit board 351. In this manner, the heat dissipation capability of the printed circuit board 351 can be improved, thereby satisfying the requirements of high-power operation.

In some examples, the metal housing 353 is not the enclosed housing shown in FIGS. 13A to 13C, the metal housing 353 is a metal plate, and the printed circuit board 351 is fixed to the metal housing 353. Optionally, the metal housing 353 is in direct contact with the housing 310 of the power tool 300, and the heat from the printed circuit board 351 is directly transferred to the housing 310 through the metal housing 353 for heat dissipation. Optionally, the metal housing 353 is not in contact with the housing 310 of the power tool 300, and the heat from the printed circuit board 351 is directly transferred to the air through the metal housing 353 and then transferred to the housing 310 for heat dissipation. In addition, in some examples, the circuit board assembly 350 may not be provided with the metal housing 353 and may instead adopt a low-pressure injection molding process so that the plastic 354 cools down and covers the printed circuit board 351. In this manner, the heat from the printed circuit board 351 is transferred to the plastic 354 and then transferred to the housing 310 directly or through the air, thereby achieving heat dissipation.

The circuit board assembly 350 includes at least two printed circuit boards 351, and the switching elements Q1 to Q6 and the controller 420 are disposed on different printed circuit boards 351, respectively. As shown in FIG. 13D, the printed circuit boards 351 include a first printed circuit board 3511 and a second printed circuit board 3512. The first printed circuit board 3511 is a control board, and the second printed circuit board 3512 is a power board. The controller 420 is disposed on the first printed circuit board 3511, and the switching elements Q1 to Q6 are disposed on the second printed circuit board 3512. Optionally, the second printed circuit board 3512 is an aluminum substrate for easy heat dissipation. The controller 420 and the switching elements Q1 to Q6 are disposed on two circuit boards, respectively so that independent heat dissipation can be achieved, resulting in good heat dissipation performance of the circuit board assembly 350.

The multiple electronic components 352 include at least one capacitor 3521, and the printed circuit boards 351 further include a third printed circuit board 3513, which is a capacitor board. As shown in FIG. 13D, the second printed circuit board 3512 and the third printed circuit board 3513 are perpendicular to each other, the capacitors 3521 are disposed on the third printed circuit board 3513, and the capacitors 3521 extend along a direction parallel to the second printed circuit board 3512. The preceding arrangement can facilitate the layout and connection of the second printed circuit board 3512 and the third printed circuit board 3513 and save the space occupied by the capacitors 3521. In addition, the first printed circuit board 3511 is disposed in the gap between the second printed circuit board 3512 and the third printed circuit board 3513, thereby making full use of the gap, achieving a compact arrangement, and reducing the volume of the circuit board assembly 350.

In some examples, as shown in FIG. 13C, the capacitors 3521 are cylindrical, the package diameter D of the capacitor 3521 is less than or equal to 10 mm, and the package length Lc of the capacitor 3521 is less than or equal to 16 mm, that is, the package dimension of the capacitor 3521 is less than or equal to 10 mm * 16 mm. Therefore, the volume occupied by the capacitors 3521 inside the circuit board assembly 350 is reduced, thereby reducing the volume of the circuit board assembly 350 accordingly. In addition, the capacitor 3521 may also be a surface mount capacitor. When the capacitor 3521 is a surface mount capacitor, the package dimension is smaller. In addition, the multiple electronic components 352, except for the capacitors 3521, have smaller package volumes. The smaller package volumes of the multiple electronic components 352 reduce the volume of the circuit board assembly 350.

In some examples, the controller 420 is configured to, when the rotational speed of the electric motor 340 is in a first rotational speed range, control the switching frequency of the switching elements Q1 to Q6 in the driver circuit 410 to be a first switching frequency and when the rotational speed of the electric motor 340 is in a second rotational speed range, control the switching frequency of the switching elements Q1 to Q6 in the driver circuit 410 to be a second switching frequency. The first switching frequency has a first positive correlation with the rotational speed of the electric motor 340, and the second switching frequency has a second positive correlation with the rotational speed of the electric motor 340. The first positive correlation and the second positive correlation may be the same or different. The rotational speeds contained in the first rotational speed range are different from the rotational speeds contained in the second rotational speed range, and the maximum rotational speed in the first rotational speed range is less than or equal to the minimum rotational speed in the second rotational speed range. By controlling the switching frequency based on different rotational speeds of the electric motor 340, both the control accuracy and the switching losses of the driver circuit 410 of the power tool 300 during operation can be balanced, thereby reducing the switching losses of the driver circuit 410.

In some examples, wide bandgap semiconductor switches are used instead of metal-oxide-semiconductor field-effect transistors (MOSFETs) for the switching elements Q1 to Q6. Based on the characteristics of wide bandgap semiconductor switches, the switching elements Q1 to Q6 can operate at a higher switching frequency, the dimensions and thicknesses of the printed circuit boards 351 can be reduced, and the noise of the switching elements Q1 to Q6 during switching can be reduced, thereby significantly reducing the switching losses of the electric motor 340.

In some examples, considering the signal complexity, power level, wiring density, and electromagnetic compatibility (EMC) requirements after the multiple electronic components 352 are disposed on the printed circuit boards 351, some printed circuit boards 351 need to be multilayer boards to satisfy the preceding requirements. In the present application, the case where the first printed circuit board 3511 is a multilayer printed circuit board and, in particular, a six-layer printed circuit board is used as an example for specific description. The first layer and the sixth layer are the surface layers, while the second to fifth layers are the inner layers. In addition, the multilayer printed circuit board may also have eight layers, nine layers, ten layers, twelve layers, fourteen layers, or other layers, which is not limited in the present application.

The first printed circuit board 3511 is a control board on which the controller 420 is disposed. The electronic components 352 on the first printed circuit board 3511 need to process high-speed signals, detect the current, voltage, or the like, and implement more functions, resulting in denser wiring and requiring multiple layers.

For wiring on the multilayer circuit board, a through hole N1 that passes through the entire board is typically used. As shown in FIG. 15, for the six-layer first printed circuit board 3511, various signal lines are set on different layers. The through hole N1 extends from the first layer at the top to the sixth layer at the bottom so that electrical conduction can be achieved between different layers via the through hole N1. However, an isolation ring with a certain range needs to be reserved on the surface layer around the through hole N1, and wiring needs to be performed outside the range of the isolation ring to prevent short circuits. Generally, multiple through holes N1 exist on the first printed circuit board 3511, resulting in isolation rings occupying a large area on the surface layer and creating a large area where wiring cannot be performed. Moreover, if wiring needs to be performed in the third layer and the fourth layer at a specific position, the through hole N1 penetrates all the corresponding layers from the first layer to the sixth layer at this position, resulting in wasted space.

In the present application, a drilling manner combining blind vias N2 and a buried via N3 is used to perform wiring on the multilayer printed circuit board, thereby achieving the electrical connection. The blind via N2 connects the surface layer to a specific inner layer and does not need to penetrate the entire board. The buried via N3 is completely hidden in the inner layer and used for connecting specific inner layers. When the layers to be connected at the first position X1 are the first layer to the third layer and the layers to be connected at the second position X2 are the third layer and the fourth layer, as shown in FIG. 15, the blind via N2 at the first position X1 is used for connecting the first layer to the third layer, and the buried via N3 at the second position X2 is used for connecting the third layer and the fourth layer. If the layers to be connected at the third position X3 are the fourth layer to the sixth layer, then the blind via N2 at the third position X3 is used for connecting the fourth layer to the sixth layer. In addition, if the layers to be connected are the second layer to the fourth layer, then only the buried via N3 needs to be set at the corresponding position to connect the second layer to the fourth layer. Similarly, if the layers to be connected are the first layer to the fourth layer, then only the blind via N2 needs to be set at the corresponding position to connect the first layer to the fourth layer. Various drilling manners combining the blind vias N2 and the buried vias N3 exist and are not described in detail one by one in the present application.

Therefore, with the combination of the blind vias N2 and the buried vias N3, only the buried via N3 is used for drilling only in the inner layer so that surface space can be freed up to a certain extent, making surface wiring easier. Moreover, for the drilling between the surface layer and a specific inner layer, the blind via N2 may be used, eliminating the need to penetrate all layers, saving space on unrelated inner layers or the surface layer, and facilitating wiring on unrelated inner layers and the surface layer. Furthermore, wiring on the surface and inner layers can be achieved on the printed circuit board 351 with a smaller area, thereby reducing the area of the printed circuit board 351 and the volume of the circuit board assembly 350.

In some examples, the controller 420 is a highly integrated controller 420 that integrates multiple functions. Optionally, the highly integrated controller 420 integrates a battery voltage detection function, eliminating the need to set an external voltage divider resistor in the circuit board assembly 350 to detect the voltage of the battery pack 430, thereby reducing the area occupied by the printed circuit board 351. Moreover, compared to detecting the voltage through the voltage divider resistor, the highly integrated controller 420 performs direct detection, resulting in a faster response speed.

Optionally, the highly integrated controller 420 integrates a current detection function, eliminating the need to set multiple external sampling resistors to detect the phase current of the electric motor 340. Instead, the phase current of the electric motor 340 is directly sampled without the resistor, thereby reducing the area of the printed circuit board 351. Moreover, compared to detecting the phase current through the external sampling resistors, the highly integrated controller 420 performs current detection, thereby greatly reducing power consumption. For a detailed description of the highly integrated controller 420 integrating the current detection function, reference is made to the following of the present application.

Optionally, the highly integrated controller 420 integrates a phase voltage feedback circuit, eliminating the need to set an external operational amplifier and a filter to acquire the phase voltage signal. Instead, the phase voltage signals from the three-phase windings of the electric motor 340 or the multi-phase output terminals of the battery pack 430 are directly collected in real time to control the electric motor 340, thereby reducing the area of the printed circuit board 351. Moreover, compared to acquiring the phase voltage signal through the external operational amplifier and the filter, the highly integrated controller 420 can directly acquire the phase voltage signal, thereby reducing the feedback delay of the phase voltage and improving the efficiency of the electric motor.

Optionally, the highly integrated controller 420 integrates a dual-channel circuit, eliminating the need for two independent control circuits and an auxiliary controller. Instead, the highly integrated controller 420 directly integrates two independent or collaborative control channels, thereby reducing the area of the printed circuit board 351. Moreover, cross-fault protection can be achieved so that when one channel is abnormal, the other channel can automatically take over the work.

Optionally, the highly integrated controller 420 integrates at least one of the battery voltage detection function, the current detection function, the phase voltage feedback circuit, or the dual-channel circuit, thereby greatly reducing external components and circuits, reducing the area of the printed circuit board 351, and reducing the volume of the circuit board assembly 350. In addition, the highly integrated controller 420 further integrates other functions, which are not described in detail one by one here.

Phase current sampling of the electric motor 340 is a critical part of electric motor control. Currently, sampling with the current sense resistor is commonly used, and the sampling method using three current sense resistors is the most commonly used. Consequently, multiple current sense resistors need to be disposed in the circuit board assembly 350, occupying a certain amount of space and making the circuit board assembly 350 larger in volume.

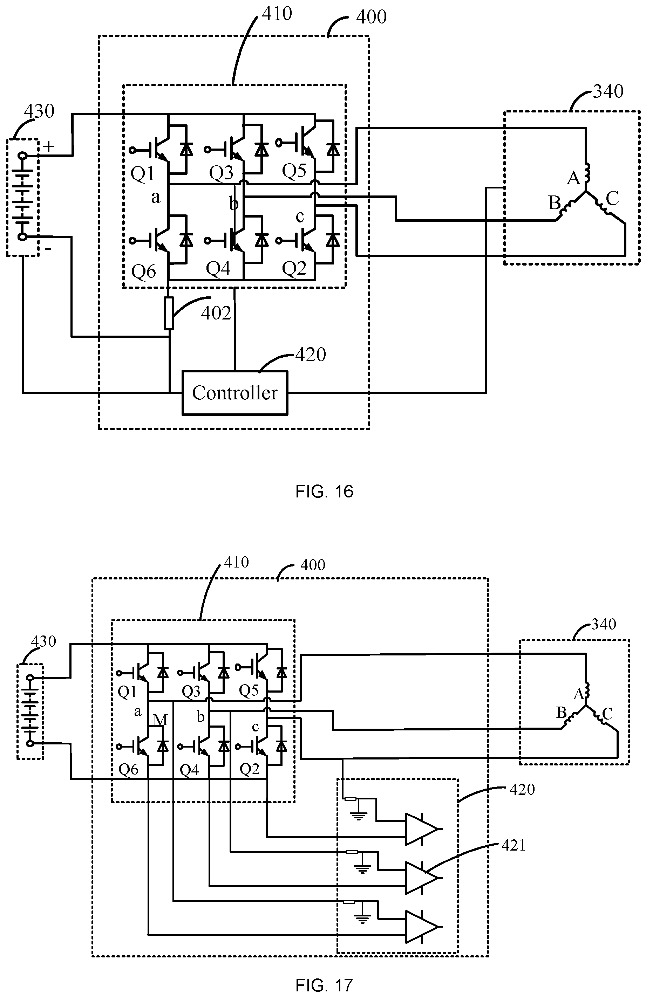

In some examples, the phase current of the electric motor 340 is sampled using the current sense resistor 402. The current sense resistor 402 is specifically disposed between the low-side switching elements and the ground terminal of the DC bus so that the currents of the three phases can all flow through the current sense resistor 402, and thus the current sense resistor 402 can acquire the currents of the three phases. As shown in FIG. 16, in the present application, the case where the current sense resistor 402 is disposed between the low-side switching element Q6 and the ground terminal of the DC bus is used as an example for specific description. The solution in which the current sense resistor 402 is disposed at this position and acquires the three phases of currents is as described in the preceding example of the present application, and the details are not repeated here.

Compared to sampling the phase current of the electric motor 340 using three current sense resistors, only one current sense resistor occupies less space on the circuit board assembly 350, making the layout of the circuit board assembly 350 simpler and reducing the dimension of the circuit board assembly 350. In addition, the power loss of the circuit board assembly 350 can be significantly reduced.

In some examples, the phase current of the electric motor 340 is sampled without using the current sense resistor. The controller 420 is a highly integrated controller 420, that is, as described above in the present application, the highly integrated controller 420 integrates the current detection function and the function of the detection unit 401. The highly integrated controller 420 has at least two first operational amplifiers 421 integrated inside, and the at least two first operational amplifiers 421 are connected in parallel with any two of the low-side switching elements Q2, Q4, and Q6 among the switching elements Q1 to Q6. When the low-side switching element is turned on and the high-side switching element corresponding to the low-side switching element is turned off, the first operational amplifier 421 connected in parallel across the low-side switching element can detect the voltage Vds across the low-side switching element. For example, when the switching element Q6 is turned on and the switching element Q1 is turned off, the first operational amplifier 421 connected in parallel across the switching element Q6 can detect the voltage Vds across the switching element Q6. As shown in FIG. 17, in the present application, the case where three first operational amplifiers 421 are connected in parallel across the three low-side switching elements Q2, Q4, and Q6, respectively is used as an example for specific description.

Each switching element includes a power transistor M, and each power transistor M has an internal resistance of Rd. The voltage Vds across the switching element is equal to the product of the internal resistance Rd of the power transistor M and the phase current flowing through the switching element. Once the voltage Vds is detected by the first operational amplifier 421, the phase current of the corresponding phase can be calculated by acquiring the internal resistance Rd of the power transistor M of the corresponding switching element.

The highly integrated controller 420 cannot directly detect the internal resistance Rd of the power transistor M. Moreover, the internal resistance Rd of the power transistor M is not a fixed value, but changes with the temperature. In addition, the corresponding relationship between the internal resistance Rd and the temperature differs for different models of power transistors M. As shown in Table 2 below, Table 2 shows the corresponding relationships between the internal resistance Rd and the temperature for two common models of power transistors M. x denotes the temperature and y denotes the internal resistance Rd.

**Table 2**

| Power transistor model | Relationship equation between the internal resistance Rd and the temperature | Temperature range (°C) |
|---|---|---|
| TPH1R204PL1 | y = (0.7x + 77.5)/95 | -40 to 150 |
| SVG042R1NL5 | y = (0.25x + 48.75)/55 | 25 to 150 |
| | y = (0.15x + 46.25)/50 | -50 to 25 |

As shown in Table 2 above, when the model of the power transistor M is TPH1R204PL1, the internal resistance Rd has a linear relationship with the temperature, and the temperature range corresponding to the power transistor M of this model is -40 to 150 °C. When the model of the power transistor M is SVG042R1NL5, the internal resistance Rd has a non-linear relationship with the temperature. The corresponding relationship equations are different when the power transistor M of this model is in different temperature ranges. The temperature range corresponding to the power transistor M of this model is -50 to 150 °C. The power transistor M of this model corresponds to one relationship equation when the temperature is from -50 to 25 °C and corresponds to another relationship equation when the temperature is from 25 to 150 °C. In addition, in another example, the highly integrated controller 420 is configured with data about the internal resistance Rd of different models of power transistors M and corresponding temperatures. The data is obtained through experiments. Therefore, the highly integrated controller 420 can retrieve data according to the obtained temperature information to determine the internal resistance Rd of the corresponding model of power transistor M.

Although the highly integrated controller 420 cannot detect the internal resistance Rd of the power transistor M, the highly integrated controller 420 integrates a detection function. The highly integrated controller 420 is configured to detect the temperature of the power transistor M in the low-side switching element Q2, Q4, or Q6, calculate and determine the internal resistance Rd of the power transistor M according to the model and temperature of the power transistor M, and then determine the phase current flowing through the power transistor M according to the internal resistance Rd of the power transistor M. Specifically, the highly integrated controller 420 can detect the temperature of the power transistor M in the low-side switching element Q2, Q4, or Q6 so that the highly integrated controller 420 can calculate and determine the corresponding internal resistance Rd according to the temperature and model of the low-side switching element. Moreover, the highly integrated controller 420 calculates the corresponding phase current according to the internal resistance Rd of the low-side switching element and the voltage Vds detected by the first operational amplifier 421. Optionally, the highly integrated controller 420 may directly calculate the phase currents of the three phases according to the three low-side switching elements. Optionally, if two first operational amplifiers 421 are provided, the highly integrated controller 420 may reconstruct the three-phase current according to the phase currents calculated based on any two low-side switching elements and the three-phase current balance equation.

The current sense resistor is not provided, the voltage across the low-side switching element is directly detected, and the phase current is acquired through the internal resistance of the power transistor M in the low-side switching element and the characteristic of the internal resistance changing with the temperature so that the space required on the circuit board assembly 350 when the current sense resistor is provided can be saved, resulting in a smaller volume of the circuit board assembly 350, thereby facilitating the layout of the circuit board assembly 350. Moreover, during this process, the internal resistance of the power transistor M induces some losses, and the internal resistance of the power transistor M is much less than the resistance of the current sense resistor, thereby reducing the resistive loss of the circuit board assembly 350 and reducing the power loss.

In some examples, as shown in FIG. 13D, a current sampling device 3522 is included on the circuit board assembly 350. The current sampling device 3522 is disposed on the first printed circuit board 3511 and is connected in series in the discharging circuit of the electric motor 340 and the battery pack 430 to sample the phase current of the electric motor 340. Optionally, the current sampling device 3522 may be the current sense resistor 402 described above. Optionally, the current sampling device 3522 may be the power transistor M included in the low-side switching element. In addition, the current sampling device 3522 may be a sensor with a current acquisition function, which is not limited in the present application. The resistance of the current sampling device 3522 is smaller, that is, the resistance of the current sense resistor 402 and the resistance of the power transistor M included in the switching element are smaller. The resistance of the current sampling device 3522 is less than or equal to 10 mΩ. Optionally, the resistance of the current sampling device 3522 is 9 mΩ. Optionally, the resistance of the current sampling device 3522 is 7 mΩ. Optionally, the resistance of the current sampling device 3522 is 5 mΩ.

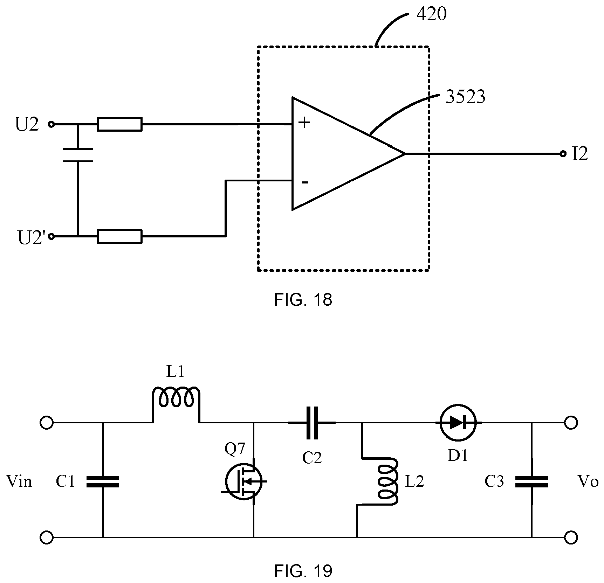

In some examples, the circuit board assembly 350 further includes a second operational amplifier 3523 configured to acquire the differential voltage signal across the current sampling device 3522 and amplify the acquired differential voltage signal. Then, the controller 420 may calculate the current of the electric motor 340 according to the amplified differential voltage signal and control the switching elements Q1 to Q6 according to the current to control the battery pack 430 to supply electric power to the electric motor 340. The current is the phase current of the electric motor 340. As shown in FIG. 18, the second operational amplifier 3523 is disposed in the controller 420 to reduce the dimension of the circuit board assembly 350. A first voltage U2 is inputted at one input terminal of the second operational amplifier 3523, and a second voltage U2' is inputted at the other input terminal of the second operational amplifier 3523. After the inputs at the two input terminals pass through the second operational amplifier 3523, the current I2 is outputted at the output terminal. The first voltage U2 and the second voltage U2' are the voltage signals across the current sampling device 3522, and the output current I2 is the phase current of the electric motor 340 obtained by converting the voltage signals. When the current sampling device 3522 is the current sense resistor 402, the first voltage U2 and the second voltage U2' are the voltage signals across the current sense resistor 402.

When the current sampling device 3522 is the power transistor M included in the switching element, the second operational amplifier 3523 corresponds to the at least two first operational amplifiers 421 mentioned above.

In some examples, the sampled analog-to-digital (AD) value needs to be less than the voltage of the controller 420, and the sampled AD value is equal to the product of the sampled current of the electric motor 340, the resistance of the current sampling device 3522, and the amplification factor of the second operational amplifier 3523. Therefore, after the amplification factor of the second operational amplifier 3523 is fixed and the sampled current of the electric motor 340 is determined, the resistance of the current sampling device 3522 needs to be set reasonably such that the product of the sampled current of the electric motor 340, the resistance of the current sampling device 3522, and the amplification factor of the second operational amplifier 3523 is less than the voltage of the controller 420. Therefore, the resistance of the current sampling device 3522 is smaller so that the sampled AD value is less than the voltage of the controller 420.

Since the resistance of the current sampling device 3522 is smaller, the voltage signal acquired by the current sampling device 3522 with a smaller resistance is also very small. In this case, the second operational amplifier 3523 with a high gain-bandwidth product is needed to perform amplification accurately to ensure the accuracy of the acquired voltage signal. The gain-bandwidth product of the second operational amplifier 3523 is greater than or equal to 5 MHz. Optionally, the gain-bandwidth product of the second operational amplifier 3523 is 7 MHz. Optionally, the gain-bandwidth product of the second operational amplifier 3523 is 10 MHz. Optionally, the gain-bandwidth product of the second operational amplifier 3523 is 12 MHz.

To ensure the accuracy of the voltage signal amplified by the second operational amplifier 3523 and to ensure that the amplified sampling result is not distorted, the actual calculated gain-bandwidth product of the electric motor 340 needs to be less than the gain-bandwidth product of the second operational amplifier 3523. When the gain-bandwidth product of the second operational amplifier 3523 is larger, the gain-bandwidth product of the electric motor 340 is highly likely to be less than the gain-bandwidth product of the second operational amplifier 3523, thereby increasing the probability that the sampling result is not distorted. The gain-bandwidth product of the electric motor 340 is obtained by multiplying the modulation frequency of the signal of the electric motor 340, the number of samplings, and the amplification factor of the second operational amplifier 3523. The amplification factor of the second operational amplifier 3523 may be 4, 8, 16, or 32.

In some examples, when the gain-bandwidth product of the second operational amplifier 3523 is 11 MHz, the modulation frequency of the electric motor 340 is 16.67 kHz, the number of samplings is 5, and the amplification factor is 16, the gain-bandwidth product of the electric motor 340 is 1.3336 MHz, which is less than the gain-bandwidth product of the second operational amplifier 3523, so the amplified sampling result is not distorted.

The circuit board assembly 350 has a compact structure; the multilayer printed circuit board uses a combination of blind vias and buried vias for wiring; the controller is a highly integrated controller that integrates multiple functions and circuits; the phase current is acquired using one current sense resistor or without using the current sense resistor; and the operational amplifier with a high gain-bandwidth product and the current sampling device with a small resistance are used, thereby contributing to the small volume of the circuit board assembly 350, that is, the area of the circuit board assembly 350 becomes smaller and the weight of the circuit board assembly 350 becomes lighter. In the case where the volume of the circuit board assembly 350 becomes smaller, the good heat dissipation and the reduced power loss are still ensured, resulting in the circuit board assembly 350 with a higher power density. Therefore, the circuit board assembly 350 has a high power density. In addition, the circuit board assembly 350 is provided with the preceding structures so that the safety and reliability of the power tool 300 using the circuit board assembly 350 can be improved, thereby effectively enhancing the cost competitiveness of the power tool 300.

In some examples, the ratio of the maximum continuous output power of the power tool 300 to the weight of the circuit board assembly 350 is greater than or equal to 9.0 kW/kg, that is, the gravimetric power density of the circuit board assembly 350 is greater than or equal to 9.0 kW/kg. Here, the gravimetric power density corresponds to the total system weight of the circuit board assembly 350. Optionally, the gravimetric power density of the circuit board assembly 350 is 10 kW/kg. Optionally, the gravimetric power density of the circuit board assembly 350 is 11.5 kW/kg. Optionally, the gravimetric power density of the circuit board assembly 350 is 13 kW/kg.

In some examples, the ratio of the maximum continuous output power of the power tool 300 to the volume of the circuit board assembly 350 is greater than or equal to 35 kW/L, that is, the volumetric power density of the circuit board assembly 350 is greater than or equal to 35 kW/L. Here, the volumetric power density corresponds to the volume of the circuit board assembly 350 including the metal housing 353. Optionally, the volumetric power density of the circuit board assembly 350 is 36 kW/L. Optionally, the volumetric power density of the circuit board assembly 350 is 38 kW/L. Optionally, the volumetric power density of the circuit board assembly 350 is 40 kW/L.

In some examples, the ratio of the maximum continuous output power of the power tool 300 to the maximum vertical projection area S of the circuit board assembly 350 is greater than or equal to 0.1 kW/cm². That is, the areal power density of the circuit board assembly 350 is greater than or equal to 0.1 kW/cm². Here, the areal power density corresponds to the area of the circuit board assembly 350 including the metal housing 353. Optionally, the areal power density of the circuit board assembly 350 is 0.3 kW/cm². Optionally, the areal power density of the circuit board assembly 350 is 0.5 kW/cm². Optionally, the areal power density of the circuit board assembly 350 is 0.7 kW/cm².

The maximum continuous output power density mentioned above is measured under windless conditions and is obtained by multiplying the maximum continuous discharge current and the power supply voltage.

In some examples, as described above in the present application, the voltage of the battery pack 430 is greater than or equal to 4 V and less than or equal to 80 V, that is, the circuit board assembly 350 may be suitable for power tools 300 with a variety of voltage ranges, that is, the circuit board assembly 350 is suitable for a variety of types of power tools 300.

The controller 420 may detect and manage the battery pack 430, and the controller 420 may control the electric motor 340 based on the detected voltage value of the battery pack 430. When the battery pack 430 has a first voltage, according to the control manner of the electric motor 340 corresponding to the first voltage, the controller 420 controls the electric motor 340 to operate. When the battery pack 430 has a second voltage, according to the control manner of the electric motor 340 corresponding to the second voltage, the controller 420 controls the electric motor 340 to operate. Therefore, when the battery packs 430 of different power tools 300 have different voltages, the circuit board assembly 350 can always be adapted to control the operation of different power tools 300.

The circuit board assembly 350 is provided with the circuit shown in FIG. 19 to make the circuit board assembly 350 suitable for power tools 300 with a variety of voltage ranges. In FIG. 19, Vin denotes the input voltage, which corresponds to the real-time input voltage of the battery pack 430, and Vo denotes the output voltage, which is the voltage outputted to drive the power tool 300 after the input voltage Vin is boosted or bucked by the circuit.

As shown in FIG. 19, when a switching element Q7 is turned on, the input voltage Vin charges an inductor L1, and a capacitor C2 discharges to charge an inductor L2. In this case, a diode D1 is cut off, so only a capacitor C3 can provide the current to the outside. Moreover, a capacitor C1 filters the input voltage Vin to remove interference from the input voltage Vin. Moreover, the capacitor C1 stabilizes the input voltage Vin by discharging to supplement energy when the input voltage Vin drops instantaneously and absorbing the excess voltage when the input voltage Vin rises suddenly, thereby ensuring that the subsequent circuit receives a stable voltage. When the switching element Q7 is turned off, the current on the inductors L1 and L2 cannot change suddenly, the polarities of the two inductors are reversed to maintain the current, and the reversed voltages of the inductors L1 and L2 are superimposed in series, causing the diode D1 to be turned on. During the turn-off process of the switching element Q7, the current is provided to the outside through the input voltage Vin via the inductor L1, the capacitor C2, and the diode D1, and the inductor L2 also provides the current to the outside through the diode D1.

The above describes the working process of the switching element Q7 in the circuit in FIG. 19 being turned on and off. The output voltage Vo is obtained by boosting or bucking the input voltage Vin, which is related to the on or off state of the switching element Q7. Vo = ton/(T-ton)*Vin, where T denotes the time of one cycle, and ton denotes the time during which the switching element Q7 is turned on in one cycle, that is, Vo = D/(1-D)*Vin, where D denotes the ratio of the time during which the switching element Q7 is turned on to the entire cycle. When D is less than 0.5, the input voltage Vin is bucked to obtain the output voltage Vo; when D is greater than 0.5, the input voltage Vin is boosted to obtain the output voltage Vo; and when D is equal to 0.5, the input voltage Vin is equal to the output voltage Vo.

The input voltage Vin of the preceding circuit has a wider range. Through the preceding circuit, the circuit board assembly 350 is suitable for power tools 300 with different voltages. Moreover, the input current is continuous, and the ripple and power supply noise can be reduced. In addition, the inductors L1 and L2 may be separate and independent inductors, thereby enabling a flexible layout on the circuit board assembly 350, or the inductors L1 and L2 may be wound around the same magnetic core, thereby significantly reducing the dimension of the circuit board assembly 350.

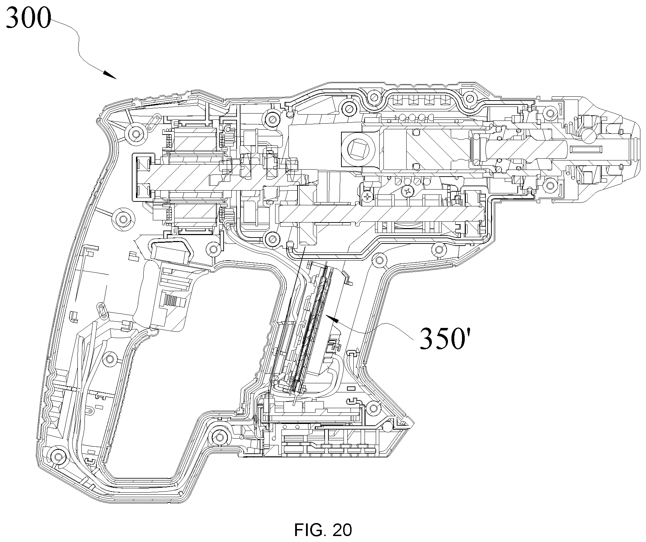

The circuit board assemblies adapted to different power tools 300 have one or more common components or layouts. For example, the circuit board assemblies of one or more types of power tools 300 may each include one or more of the following: the same controller, the same capacitor, the same dimension and shape of the printed circuit board, or the layout of basically the same multiple electronic components. For example, in FIG. 11, the controller 420 of the circuit board assembly 350 of the electric drill is disposed on the first printed circuit board 3511, and the switching elements Q1 to Q6 are disposed on the second printed circuit board 3512, which is the same for the circuit board assembly 350' of the electric hammer in FIG. 20. Moreover, the shape and dimension of the circuit board assembly 350, the relative positions of multiple electronic components 352 such as the capacitors 3521, and the composition of multiple electronic components 352 in FIG. 1 are the same as those of the circuit board assembly 350' in FIG. 20. The circuit board assembly 350' is the circuit board assembly 350.

Therefore, after the circuit board assembly 350 is configured, the circuit board assembly 350 may be applied to various power tools 300 without changing the structure of the circuit board assembly 350. For example, the circuit board assembly in the electric drill in FIG. 11 and the circuit board assembly in the electric hammer in FIG. 20 are the same circuit board assemblies 350. In addition, the circuit board assemblies in various power tools such as a table saw, a push mower, a hedge trimmer, and a sander are the same circuit board assemblies 350. Power tools with different structures or different types can all use the same circuit board assembly 350.

Optionally, when the circuit board assembly 350 is suitable for various power tools 300, the firmware of multiple electronic components 352 and the firmware of the controller 220 are basically the same. The firmware of the controller 220 may include an algorithm through which the drive parameter of the electric motor 340 in the corresponding power tool 300 is selected.

Optionally, when the circuit board assembly 350 is suitable for various power tools 300, the shape or arrangement of the metal housing 353 included in the circuit board assembly 350 may be changed as needed to adapt to different structural requirements or heat dissipation requirements.

Optionally, when the circuit board assembly 350 is suitable for various power tools 300, the circuit board assembly 350 includes multiple power modes, such as an energy-saving mode, a medium power mode, and a high power mode, and the circuit board assembly 350 may adopt the corresponding power mode according to the operating requirements of different power tools 300.

In some examples, a system including a first power tool and a second power tool may exist, where the first power tool and the second power tool may be the same type or different types of power tools. The first power tool includes a first circuit board assembly, and the second power tool includes a second circuit board assembly. The first circuit board assembly and the second circuit board assembly may both include printed circuit boards of the same dimension, electronic components of the same type, and the like, that is, the first circuit board assembly and the second circuit board assembly are both the circuit board assemblies 350.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. A power tool, comprising:
a working head (330);
an electric motor (340) that drives the working head directly or indirectly;
a battery pack (430) that supplies power to the electric motor; and
a circuit board assembly (350) electrically connected to the electric motor and the battery pack, wherein the circuit board assembly comprises at least:
a detection circuit (401) configured to detect a working parameter of the power tool;
a driver circuit (210, 410) comprising a plurality of switching elements (Q1, Q2, Q3, Q4, Q5, Q6) electrically connected between the battery pack and the electric motor; and
a controller (220, 420) configured to control the plurality of switching elements according to the working parameter to control the battery pack to supply electric power to the electric motor;
wherein a voltage of the battery pack is greater than or equal to 4 V and less than or equal to 80 V, and a ratio of maximum continuous output power of the power tool to weight of the circuit board assembly is greater than or equal to 9.0 kW/kg.

2. The power tool of claim 1, wherein the working parameter comprises voltage, temperature, and current of the power tool.

3. The power tool of claim 1, wherein the circuit board assembly comprises at least two printed circuit boards (351), and the plurality of switching elements and the controller are disposed on different ones of the at least two printed circuit boards.

4. The power tool of claim 3, wherein the circuit board assembly further comprises a metal housing (353), the at least two printed circuit boards are enclosed by the metal housing, and a thermal conductivity of the metal housing is greater than or equal to 90 W/(m·K).

5. The power tool of claim 1, wherein the circuit board assembly further comprises a capacitor board, a capacitor (C1, C2, C3) is mounted on the capacitor board, the capacitor board is perpendicular to a power board, and the capacitor is parallel to the power board.

6. The power tool of claim 5, wherein the capacitor is cylindrical, a package diameter (D) of the capacitor is less than or equal to 10 mm, and a package length (L) of the capacitor is less than or equal to 16 mm.

7. The power tool of claim 3, wherein a printed circuit board of the at least two printed circuit boards is a multilayer printed circuit board, and the multilayer printed circuit board adopts a drilling manner combining blind vias (N2) and buried vias (N3) to achieve an electrical connection.

8. The power tool of claim 7, wherein the multilayer printed circuit board comprises a first layer to a sixth layer, a blind via (N2) at a first position is used for connecting the first layer to a third layer, a blind via (N2) at a third position is used for connecting a fourth layer to the sixth layer, and a buried via (N3) at a second position is used for connecting the third layer and the fourth layer.

9. The power tool of claim 1, wherein the controller is a highly integrated controller (420), and the highly integrated controller integrates at least one of a battery voltage detection function, a current detection function, a phase voltage feedback circuit, or a dual-channel circuit.

10. The power tool of claim 1, wherein the plurality of switching elements comprise a plurality of low-side switching elements, the controller is a highly integrated controller (420), the highly integrated controller has at least two first operational amplifiers integrated inside, and the at least two first operational amplifiers are connected in parallel with any two of the plurality of low-side switching elements to detect voltages across the any two of the plurality of low-side switching elements.

11. The power tool of claim 10, wherein the highly integrated controller is configured to detect temperature of a power transistor (M) in a low-side switching element of the plurality of low-side switching elements, calculate and determine internal resistance of the power transistor according to a model and the temperature of the power transistor, and determine a phase current flowing through the power transistor according to the internal resistance of the power transistor.

12. The power tool of claim 11, wherein a corresponding relationship between the internal resistance and the temperature differs for different models of power transistors.

13. The power tool of claim 1, wherein the circuit board assembly comprises one current sense resistor disposed between a low-side switching element (Q2, Q4, Q6) and a ground terminal of a direct current (DC) bus, and all three phases of currents are capable of flowing through the current sense resistor.

14. The power tool of claim 1, wherein the circuit board assembly further comprises a current sampling device (3522) and a second operational amplifier (3523), the current sampling device samples a phase current of the electric motor, and the second operational amplifier acquires and amplifies a differential voltage signal across the current sampling device.

15. The power tool of claim 14, wherein resistance of the current sampling device is less than or equal to 10 mΩ, and a gain-bandwidth product of the second operational amplifier is greater than or equal to 5 MHz.
